# EUROPEAN PATENT SPECIFICATION

(11) **EP 3 637 646 B1**
(45) Date of publication and mention of the grant of the patent: **11.09.2024**
(21) Application number: 18794434.3
(22) Date of filing: 13.04.2018
(51) Int. Cl.: H04L 1/00, H04L 5/00

(54) **INFORMATION TRANSMITTING AND RECEIVING METHOD AND DEVICE**
INFORMATIONSSENDE- UND -EMPFANGSVERFAHREN UND VORRICHTUNG
PROCÉDÉ DE TRANSMISSION ET DE RÉCEPTION D'INFORMATIONS ET DISPOSITIF

(30) Priority: 05.05.2017 CN 201710312388
(43) Date of publication of application: 15.04.2020
(73) Proprietor: ZTE Corporation, Shenzhen, Guangdong 518057 (CN)
(72) Inventor: CHEN, Xianming, Shenzhen Guangdong 518057 (CN); DAI, Bo, Shenzhen Guangdong 518057 (CN); LIU, Kun, Shenzhen Guangdong 518057 (CN); YANG, Weiwei, Shenzhen Guangdong 518057 (CN); FANG, Huiying, Shenzhen Guangdong 518057 (CN)
(74) Representative: Iannone, Carlo Luigi
(86) International application number: PCT/CN2018/083102
(87) International publication number: WO 2018/201880

(56) References cited:
- CN-A- 101 547 497
- CN-A- 101 868 004
- CN-A- 102 781 065
- CN-A- 102 938 934
- US-A1- 2015 003 442
- NOKIA ET AL: "SC-PTM for FeMTC Search Space Considerations", vol. RAN WG1, no. Gothenburg, Sweden; 20160822 - 20160826, 12 August 2016 (2016-08-12), XP051141876, Retrieved from the Internet <URL:http://www.3gpp.org/ftp/tsg_ran/WG1_RL1/TSGR1_86/Docs/> [retrieved on 20160812]
- INTEL CORPORATION: "Discussion on continuous uplink transmissions in eMTC", vol. RAN WG1, no. Nanjing, China; 20160523 - 20160527, 14 May 2016 (2016-05-14), XP051096198, Retrieved from the Internet <URL:http://www.3gpp.org/ftp/tsg_ran/WG1_RL1/TSGR1_85/Docs/> [retrieved on 20160514]

## Description

### TECHNICAL FIELD

The present invention relates to the field of wireless communications and, in particular, to an information sending and receiving method and apparatus, a device and a storage medium.

### BACKGROUND

To meet the requirements of a cellular Internet of Things, an Enhancement for Machine Type Communication (eMTC) access system and a Further eMTC (FeMTC) access system are respectively supported in a Long Term Evolution (LTE) Rel-13 and an LTE Rel-14 released by the Third Generation Partnership Project (3GPP) organization. Compared with the eMTC system, the enhancement of the FeMTC system mainly includes supporting the higher data rate, supporting multicast, supporting enhanced positioning, supporting enhanced mobility and supporting an enhanced voice communication function. In an LTE Rel-15, an even FeMTC (eFeMTC) system based on the FeMTC system has begun to be standardized.

In the eMTC and FeMTC systems, when a user equipment is in a connected state of radio resource control (RRC), a type of downlink control information or signal which the user equipment needs to receive is predefined type. Moreover, the user equipment can only acquire the downlink control information or the signal by monitoring a user equipment-specific search space or a user equipment-specific physical resource configured by semi-static signaling. The above method limits the scheduling flexibility of the downlink control information and signal and limits further improvement of resource utilization efficiency. Further relevant technologies are also known from NOKIA ET AL: "SC-PTM for FeMTC Search Space Considerations", 3GPP DRAFT; R1-166606, (2016-08-12) and INTEL CORPORATION: "Discussion on continuous uplink transmissions in eMTC", 3GPP DRAFT; R1-165224 (2016-05-14).

### SUMMARY

A method performed by user equipment, UE, a method performed by a network side device, a UE and an information sending device are defined by the appended independent claims 1, 8, 14, 15 respectively. The invention is defined by the appended claims.

The above description is only an overview of the technical solutions of the present invention. In order to better understand the technical means of the present invention, the present invention may be implemented in accordance with the content of the description. The above and other objects, features and advantages of the present invention will be more apparent from specific embodiments of the present invention described below.

### BRIEF DESCRIPTION OF DRAWINGS

Various other advantages and benefits will become apparent to those skilled in the art through reading the detailed description of the preferred embodiments hereinafter. The drawings are only used for the purpose of illustrating the preferred embodiments and are not construed as a limit of the present invention. The same reference numerals in the drawings indicate the same components. In the drawings:
FIG. 1 is a flowchart of an information receiving method according to embodiment 1 of the present invention;
FIGS. 2 to 7 and FIGS. 8(a) and 8(b) are schematic diagrams illustrating a time domain position of a third search space in embodiments of the present invention;
FIGS. 9 and 10 are schematic diagrams illustrating a time domain position of a first uplink gap in the embodiments of the present invention;
FIG. 11 is a flowchart of an information sending method according to embodiment 2 of the present invention;
FIG. 12 is a block diagram illustrating a user equipment according to embodiment 3 of the present invention;
FIG. 13 is a block diagram illustrating an information sending device according to embodiment 4 of the present invention;
FIG. 14 is a block diagram illustrating an information sending apparatus according to a sixth embodiment of the present invention; and
FIG. 15 is a block diagram illustrating an information receiving apparatus according to a seventh embodiment of the present invention.

### DETAILED DESCRIPTION

Exemplary embodiments of the present disclosure will be described in detail with reference to the drawings. The drawings illustrate the exemplary embodiments of the present disclosure, but it should be understood that the present disclosure may be implemented in many ways and should not be limited to the embodiments set forth herein. On the contrary, these embodiments are provided for a thorough understanding of the present disclosure and to fully convey the scope of the present disclosure to those skilled in the art.

### Embodiment 1

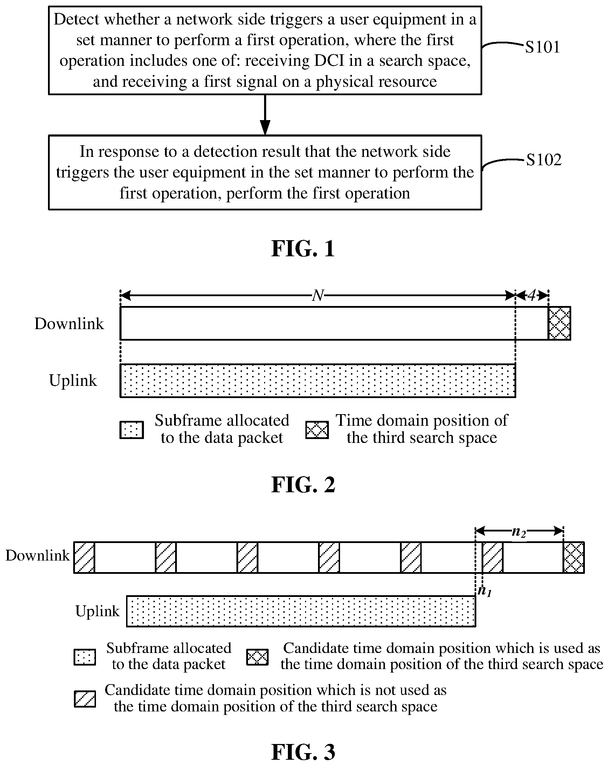

An embodiment of the present invention provides an information receiving method applied to a user equipment side. As shown in FIG. 1, the method includes steps described below.

In step S 101, it is detected whether a network side triggers a user equipment in a set manner to perform a first operation, where the first operation includes one of: receiving downlink control information (DCI) in a search space, or receiving a first signal on a physical resource.

In step S 102, in response to a detection result that the network side triggers the user equipment in the set manner to perform the first operation, the first operation is performed.

That is to say, with the method in the present invention, the user equipment performs the first operation only when the user equipment succeeds in detecting a triggering operation of the network side, thereby improving scheduling flexibility of the DCI or a signal, and resource utilization efficiency.

Objects, technical solutions and advantages of the present invention will be clearer from a detailed description of the embodiments of the present invention in conjunction with the drawings. It is to be noted that if not in collision, the features in this embodiment may be combined with each other.

In an embodiment of the present invention, in step S101, detecting whether the network side triggers the user equipment in the set manner to perform the first operation is implemented in at least one of manners described below.

In a manner 1, it is detected whether the network side triggers the user equipment by a data packet to perform the first operation.

In a specific embodiment of the present invention, a specific implementation process of this manner is detecting whether the network side schedules the data packet (equivalent to detecting whether the network side sends the DCI for granting a resource for a transmission of a data packet of the user equipment, and the DCI being sent indicating that the network side schedules the data packet), and in response to detecting that the network side schedules the data packet, determining that the network side triggers the user equipment to perform the first operation.

In a manner 2, it is detected whether the network side triggers the user equipment by a number of subframes allocated to the data packet to perform the first operation.

In a specific embodiment of the present invention, a specific implementation process of this manner is detecting whether the number of subframes allocated by the network side to the data packet reaches a set threshold, and in response to detecting that the number of subframes reaches the set threshold, determining that the network side triggers the user equipment to perform the first operation.

In a manner 3, it is detected whether the network side triggers the user equipment by a format of the DCI to perform the first operation.

In a specific embodiment of the present invention, a specific implementation process of this manner is detecting whether the format of the DCI, which is used for a resource grant and sent by the network side, is a specified format, and in response to detecting that the format of the DCI is the specified format, determining that the network side triggers the user equipment to perform the first operation.

For example, it is detected whether the format of the DCI, which is used for the resource grant and sent by the network side, is 6-0B, and if the format of the DCI is 6-0B, the user equipment is triggered to perform the first operation. Alternatively, it is detected whether the format of the DCI, which is used for the resource grant and sent by the network side, is 6-1B, and if the format of the DCI is 6-1B, the user equipment is triggered to perform the first operation. Alternatively, it is detected whether the format of the DCI, which is used for the resource grant and sent by the network side, is one of 6-0B or 6-1B, and if the format of the DCI is one of 6-0B or 6-1B, the user equipment is triggered to perform the first operation.

In a manner 4, it is detected whether the network side triggers the user equipment by signaling in the DCI to perform the first operation.

In a specific embodiment of the present invention, a specific implementation process of this manner is detecting whether the signaling in the DCI, which is used for the resource grant and sent by the network side, instructs the user equipment to perform the first operation, and in response to detecting that the signaling in the DCI instructs the user equipment to perform the first operation, determining that the network side triggers the user equipment to perform the first operation.

For example, it is detected whether a value of the signaling in the DCI, which is used for the resource grant and sent by the network side, is 1, and if the value of the signaling is 1, it is determined that the network side triggers the user equipment to perform the first operation.

In a manner 5, it is detected whether the network side triggers the user equipment by a transmission mode of the data packet to perform the first operation.

In a specific embodiment of the present invention, a specific implementation process of this manner is detecting whether the transmission mode configured by the network side for the data packet is a specified transmission mode, and in response to detecting that the transmission mode of the data packet is the specified transmission mode, determining that the network side triggers the user equipment to perform the first operation.

For example, it is detected whether the transmission mode of the data packet on the network side is spatial multiplexing, and if the transmission mode of the data packet is the spatial multiplexing, it is determined that the network side triggers the user equipment to perform the first operation. Alternatively, it is detected whether the transmission mode of the data packet on the network side is spatial diversity, and if the transmission mode of the data packet is the spatial diversity, it is determined that the network side triggers the user equipment to perform the first operation.

In a manner 6, it is detected whether the network side triggers the user equipment by a signal to perform the first operation.

In a specific embodiment of the present invention, a specific implementation process of this manner is detecting whether the network side delivers a second signal with a specified sequence on a specified time-frequency resource, and in response to detecting that the network side delivers the second signal with the specified sequence on the specified time-frequency resource, determining that the network side triggers the user equipment to perform the first operation.

The sequence used by the second signal is preset or determined by signaling, and the time-frequency resource occupied by the second signal is preset or determined by the signaling.

In a manner 7, it is detected whether the network side triggers the user equipment by a type of the data packet to perform the first operation.

In a specific embodiment of the present invention, a specific implementation process of this manner is detecting whether the data packet scheduled by the network side has a specified type, and in response to detecting that the data packet scheduled by the network side has the specified type, determining that the network side triggers the user equipment to perform the first operation.

For example, it is detected whether the type of the data packet transmitted by the network side is a data packet for confirming reception of a radio resource control (RRC) connection release message, and if the type of the data packet is the data packet for confirming reception of the RRC connection release message, it is determined that the network side triggers the user equipment to perform the first operation.

In a manner 8, it is detected whether the network side triggers the user equipment by a subframe length (equivalent to duration) to perform the first operation.

In a specific embodiment of the present invention, assuming that subframes with two lengths (a normal subframe and a short subframe) exist in a system, a specific implementation process of this manner is detecting whether the network side schedules the short subframe, and in response to detecting that the network side schedules the short subframe, determining that the network side triggers the user equipment to perform the first operation. Scheduling the short subframe is equivalent to scheduling the transmission of the data packet on the short subframe.

In an optional embodiment of the present invention, under a condition that the first operation is receiving the DCI in the search space, the DCI includes at least one of: DCI for the resource grant, DCI for power control, DCI for acknowledgement (ACK) feedback, or DCI for negative acknowledgement (NACK) feedback.

The DCI for the resource grant includes at least one of: DCI for granting a resource to a new data packet or DCI for granting a resource for a retransmission of the data packet.

The DCI for granting the resource to the new data packet is not only used for granting the resource to the new data packet but also used for providing the ACK feedback for a last data packet using a same hybrid automatic repeat reQuest (HARQ) process. For example, taking an uplink data packet as an example and assuming that there are two data packets (represented as a first data packet and a second data packet), the first data packet is sent by the user equipment and successfully decoded by the network side, and then DCI for granting a resource to the second data packet is sent by the network side, where a HARQ process indicated in the DCI is the same as a HARQ process used by the first data packet; when the user equipment receives the DCI for granting the resource to the second data packet, it is considered that the user equipment not only acquires the resource granted to the second data packet, but also receives the ACK feedback for the first data packet (equivalent to a decoding success of the first data packet).

The DCI for the ACK feedback and/or the NACK feedback includes at least one of: common DCI or user equipment-specific DCI.

The common DCI carries feedback for multiple user equipments, and the user equipment-specific DCI carries feedback for the unique user equipment, where the feedback is the ACK feedback or the NACK feedback.

The user equipment-specific DCI for the ACK feedback includes features described below.

A payload of the user equipment-specific DCI is all 1. For example, if the payload includes 16 bits, the 16 bits all take a value of 1. In this case, when the user equipment detects the user equipment-specific DCI whose payload is all 1, it is considered that the user equipment has received the ACK feedback.

The user equipment-specific DCI for the NACK feedback includes features described below.

A payload of the user equipment-specific DCI is all 1. For example, if the payload includes 16 bits, the 16 bits all take the value of 1. In this case, when the user equipment detects the user equipment-specific DCI whose payload is all 1, it is considered that the user equipment has received the NACK feedback.

In an optional embodiment of the present invention, an available control channel element set for the common DCI is determined in one of manners described below.
(1) The available control channel element set is preset. For example, it is preset that only one available control channel element set exists and the control channel element set includes all control channel elements in the search space.
(2) The available control channel element set is determined by the signaling.

At least one available control channel element set exists.

In an optional embodiment of the present invention, positions of the ACK feedback and/or the NACK feedback in the common DCI (i.e., bits in the common DCI corresponding to the ACK feedback and/or the NACK feedback) are determined in one of manners described below.
(1) The positions of the ACK feedback and/or the NACK feedback in the common DCI are determined by the signaling.
(2) The positions of the ACK feedback and/or the NACK feedback in the common DCI are determined according to a frequency domain resource allocated to the data packet, where the frequency domain resource includes at least one of: a resource block and a narrow band.

For example, in an example in which the frequency domain resource includes the narrow band, assuming that the number of narrow bands allocatable to the data packet (i.e., narrow bands for the transmission of the data packet) is 16 and the common DCI includes 16 bits, 16 narrow bands allocatable to the data packet have a one-to-one correspondence with the 16 bits of the common DCI. In an example in which the frequency domain resource includes the narrow band and the resource block, assuming that the number of narrow bands allocatable to the data packet (i.e., the narrow bands for the transmission of the data packet) is 8, each narrow band includes two types of resource block set allocatable to the data packet, and the common DCI includes 16 bits, a first type of resource block set and a second type of resource block set in a first narrow band correspond to a first bit and a second bit among the 16 bits respectively, and in the same way, a first type of resource block set and a second type of resource block set in an eighth narrow band correspond to a 15th bit and a 16th bit among the 16 bits respectively.

A radio network temporal identity (RNTI) for cyclic redundancy check (CRC) scrambling of the common DCI is preset or determined by the signaling.

In an embodiment of the present invention, under a condition that the first operation is receiving the DCI in the search space, the search space includes at least one of: a first search space, a second search space or a third search space.

The first search space is a user equipment-specific search space (USS). The USS is an existing search space before the user equipment is triggered to receive the DCI in the search space.

The second search space is a subset of the USS (i.e., the first search space).

The third search space is a newly-added user equipment-specific search space or a newly-added common search space (relative to the existing search space before the user equipment is triggered to receive the DCI in the search space).

It is be noted that the user equipment-specific search space means that the DCI received in this search space is all the user equipment-specific DCI, and the common search space means that the DCI received in this search space is the common DCI (the common DCI includes information sent to multiple user equipments).

In an embodiment of the present invention, the second search space and/or the third search space are located within a transmission period of the data packet, that is, time domain positions of the second search space and/or the third search space are located within a time range from a starting moment of a first subframe allocated to the data packet to an ending moment of a last one subframe allocated to the data packet. Under a condition that the DCI is the DCI for the ACK feedback, by the method, the ACK feedback may be received before the uplink data packet is sent on all subframes according to the number of subframes allocated to the uplink data packet, so that the user equipment can stop sending the uplink data packet in advance, thereby reducing unnecessary resource losses and power losses of the user equipment.

In an embodiment of the present invention, under a condition that the second search space and/or the third search space are located within the transmission period of the data packet, as a preferred implementation manner, the time domain positions of the second search space and/or the third search space are located after a K1-th subframe allocated to the data packet and before a K2-th to last subframe allocated to the data packet, where K1 and K2 are integers greater than 1. For example, under a condition that the DCI is the DCI for the ACK feedback, when a network side device has not decoded the data packet, the user equipment has no need to monitor the ACK feedback, that is, the method considers a delay for decoding the data packet by the network side device.

In an embodiment of the present invention, the time domain position of the third search space is determined in manners described below.

In a manner 1, the time domain position of the third search space is determined by the signaling. For example, a starting subframe of the time domain position of the third search space is directly acquired by the signaling.

In a manner 2, the time domain position of the third search space is determined by the last one subframe allocated to the data packet (an ending subframe for sending the data packet). For example, the time domain position of the third search space starts from a Q1-th subframe after the ending subframe for sending the data packet, where Q1 is an integer greater than 1.

In a specific example of the embodiment of the present invention, it is assumed that the data packet is the uplink data packet.

In this example, the time domain position of the third search space is determined by the last one subframe allocated to the data packet (the ending subframe for sending the data packet). Specifically, the time domain position of the third search space starts from a fourth subframe after the ending subframe for sending the data packet, as shown by a grid in FIG. 2.

In a manner 3, a candidate time domain position of the third search space is determined by the signaling, and the time domain position of the third search space is determined by the candidate time domain position and the last one subframe allocated to the data packet (the ending subframe for sending the data packet). For example, the time domain position of the third search space is a first time domain position subsequent to a Q2-th subframe after the ending subframe for sending the data packet among all candidate time domain positions; or the time domain position of the third search space is a first time domain position, which is corresponding to the HARQ process of the data packet and subsequent to the Q2-th subframe after the ending subframe for sending the data packet, among all the candidate time domain positions; or the time domain position of the third search space is first Q3 consecutive time domain positions subsequent to the Q2-th subframe after the ending subframe for sending the data packet among all the candidate time domain positions, where Q2 and Q3 are integers greater than 1.

The candidate time domain position of the third search space is determined by the signaling in one of manners described below.

A starting subframe and a size of the candidate time domain position of the third search space are determined by the signaling.

The starting subframe of the candidate time domain position of the third search space is determined by the signaling, and a preset size of the candidate time domain position of the third search space is employed. For example, it is preset that the size of the candidate time domain position of the third search space is equal to a size of a time domain position of the first search space (i.e., the user equipment-specific search space).

In a specific example of the embodiment of the present invention, it is assumed that the data packet is the uplink data packet.

In this example, the network side device (for example, a base station) indicates the candidate time domain position by the signaling, and the user equipment may acquire the candidate time domain position by the signaling, where the candidate time domain position periodically appears, as shown in FIG. 3.

In this example, the time domain position of the third search space is determined by the candidate time domain position and the last one subframe allocated to the data packet. Specifically, the time domain position of the third search space is the first time domain position subsequent to a third subframe after the ending subframe for sending the data packet among all the candidate time domain positions. Assuming that n1 is an integer less than 3 and n2 is an integer greater than 3, the time domain position of the third search space is as shown in FIG. 3.

In another specific example of the embodiment of the present invention, it is assumed that the data packet is the uplink data packet.

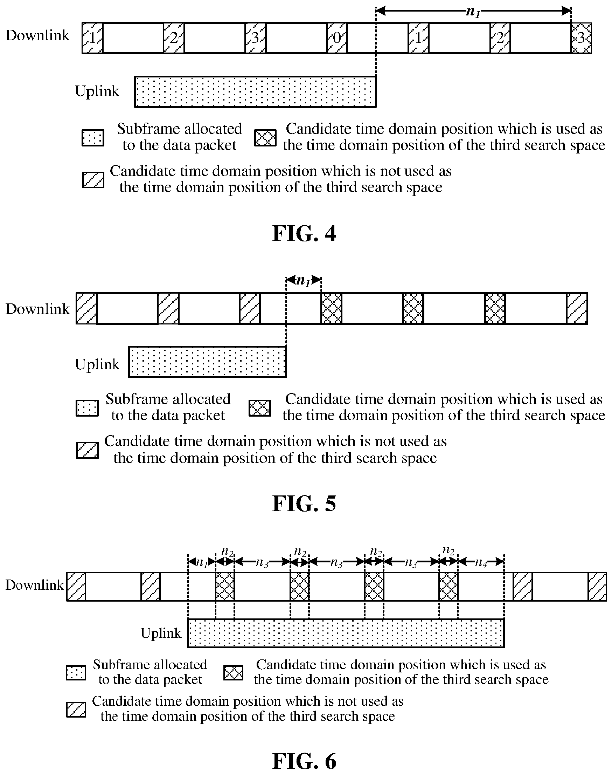

In this example, the network side device (for example, the base station) indicates the candidate time domain position by the signaling, and the user equipment may acquire the candidate time domain position by the signaling, where the candidate time domain position periodically appears, as shown in FIG. 4.

In this example, the time domain position of the third search space is determined according to the candidate time domain position and the last one subframe allocated to the data packet. Specifically, the time domain position of the third search space is the first time domain position corresponding to the HARQ process of the data packet subsequent to the third subframe after the ending subframe for sending the data packet among the candidate time domain positions.

Taking 4 HARQ processes as an example, and assuming that the HARQ process used by the current data packet is a HARQ process numbered 3 and n1 is an integer greater than 3, in this case, the time domain position of the third search space is as shown in FIG. 4. In this example, a HARQ process corresponding to the candidate time domain position is determined according to the starting subframe of the candidate time domain position. Specifically, every 4 consecutive candidate time domain positions correspond to 4 types of starting subframe respectively (a first candidate time domain position corresponds to a first type of starting subframe, similarly, a second candidate time domain position corresponds to a second type of starting subframe, a third candidate time domain position corresponds to a third type of starting subframe, and a fourth candidate time domain position corresponds to the first type of starting subframe), and the 4 types of starting subframe correspond to the 4 HARQ processes (i.e., HARQ processes numbered 0, 1, 2 and 3).

In another specific example of the embodiment of the present invention, it is assumed that the data packet is the uplink data packet.

In this example, the network side device (for example, the base station) indicates the candidate time domain position by the signaling, and the user equipment may acquire the candidate time domain position by the signaling, where the candidate time domain position periodically appears, as shown in FIG. 5.

In this example, the time domain position of the third search space is determined by the candidate time domain position and the last one subframe allocated to the data packet (the ending subframe for sending the data packet). Specifically, the time domain position of the third search space is the first three consecutive time domain positions subsequent to the third subframe after the ending subframe for sending the data packet among the candidate time domain positions. Assuming that n1 is an integer greater than 3, the time domain position of the third search space is as shown in FIG. 5. In this example, if the DCI received in the third search space is common DCI for the NACK feedback, the network side device indicates a HARQ process corresponding to the NACK feedback by newly-added signaling in the common DCI, and the user equipment determines the HARQ process corresponding to the NACK feedback by the newly-added signaling.

In a manner 4, the candidate time domain position of the third search space is determined by the signaling, and the time domain position of the third search space is determined by the candidate time domain position and a subframe allocated to the data packet.

For example, the time domain position of the third search space is a time domain position after a P1-th subframe allocated to the data packet and before a P2-th to last subframe allocated to the data packet among all the candidate time domain positions, where P1 and P2 are integers greater than 1.

The candidate time domain position of the third search space is determined by the signaling in one of manners described below.

The starting subframe and the size of the candidate time domain position of the third search space are determined by the signaling.

The starting subframe of the candidate time domain position of the third search space is determined by the signaling, and the preset size of the candidate time domain position of the third search space is employed. For example, it is preset that the size of the candidate time domain position of the third search space is equal to a size of the time domain position of the first search space (i.e., the user equipment-specific search space).

In a specific example of the embodiment of the present invention, it is assumed that the data packet is the uplink data packet.

In this example, the network side device (for example, the base station) indicates the candidate time domain position by the signaling, and the user equipment can acquire the candidate time domain position by the signaling, where the candidate time domain position periodically appears, as shown in FIG. 6.

In this example, the time domain position of the third search space is determined by the candidate time domain position and the subframe allocated to the data packet. Specifically, the time domain position of the third search space is a time domain position after a third subframe allocated to the data packet and before an antepenultimate subframe allocated to the data packet among all the candidate time domain positions. Assuming that n1 and n4 are integers greater than 3, the time domain position of the third search space is finally as shown in FIG. 6.

In a manner 5, the time domain position of the third search space is determined by the number of subframes allocated to the data packet.

For example, the time domain position of the third search space starts from a (x1*P3+1)-th subframe allocated to the data packet, where x1 is a sequence which is 1, 2, ..., X1-1, where X1 is an integer greater than 1, and P3 is equal to N/X1, where N represents the number of subframes allocated to the data packet. A value of X1 is fixed or determined by the number of subframes allocated to the data packet (i.e., a value of N).

In a specific example of the embodiment of the present invention, it is assumed that the data packet is the uplink data packet.

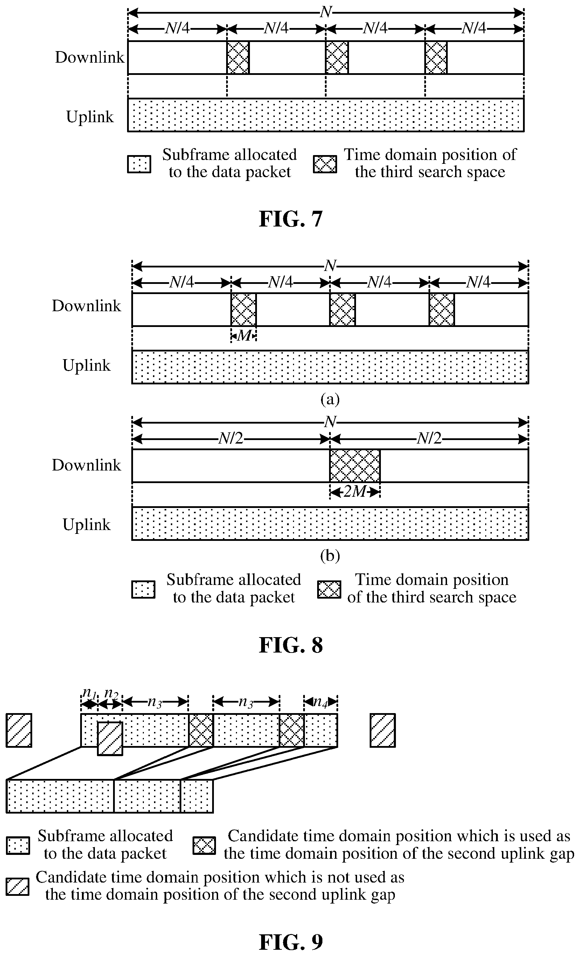

In this example, three time domain positions of the third search space start from a (P+1)-th subframe, a (2P+1)-th subframe and a (3P+1)-th subframe allocated to the data packet separately, where P is equal to N/4, and N represents the number of subframes allocated to the data packet, as shown in FIG. 7.

In a manner 6, the time domain position of the third search space is determined by the number of subframes allocated to the data packet and a number of subframes allocated to the third search space. For example, the time domain position of the third search space starts from a (x2*P4+1)-th subframe allocated to the data packet, where x2 is a sequence which is 1, 2, ..., X2-1, where X2 is an integer greater than 1, and P4 is equal to N/X2, where N represents the number of subframes allocated to the data packet. A value of X2 is determined by the number of subframes allocated to the data packet (i.e., the value of N) and the number of subframes allocated to the third search space (i.e., a size of the time domain position of the third search space).

In a specific example of the embodiment of the present invention, it is assumed that the data packet is the uplink data packet.

In this example, the time domain position of the third search space is determined by the number of subframes allocated to the data packet and the number of subframes allocated to the third search space. It is assumed that the number of subframes allocated to the data packet is N.

Specifically, under a condition that the number of subframes allocated to the third search space is M, there are three time domain positions of the third search space, which start from the (P+1)-th subframe, the (2P+1)-th subframe and the (3P+1)-th subframe allocated to the data packet separately, where P is equal to N/4, as shown in FIG. 8(a).

Under a condition that the number of subframes allocated to the third search space is 2M, there is one time domain position of the third search space which starts from a (Q+1)-th subframe allocated to the data packet, where Q is equal to N/2, as shown in FIG. 8(b).

In a manner 7, the time domain position of the first search space is used as the candidate time domain position of the third search space, and the time domain position of the third search space is determined by the candidate time domain position and the last one subframe allocated to the data packet (i.e., the ending subframe for sending the data packet). This manner is similar to the manner 3 and only differs from the manner 3 in that the candidate time domain position of the third search space is determined in different manners. For a specific example, reference may be made to the description of the example in the manner 3.

In a manner 8, the time domain position of the first search space is used as the candidate time domain position of the third search space, and the time domain position of the third search space is determined by the candidate time domain position and the subframe allocated to the data packet. This manner is similar to the manner 4 and only differs from the manner 4 in that the candidate time domain position of the third search space is determined in different manners. For a specific example, reference may be made to the description of the example in the manner 4.

It is to be noted that in the embodiments of the present invention, the size of the time domain position of the third search space is equivalent to the number of subframes allocated to the third search space. If not particularly indicated, the size of the time domain position of the third search space is determined in one of manners described below.

The size of the time domain position of the third search space is determined by the signaling.

A preset size of the time domain position of the third search space is employed. For example, it is preset that the size of the candidate time domain position of the third search space is equal to the size of the time domain position of the first search space (i.e., the user equipment-specific search space).

In an optional embodiment of the present invention, a narrow band of the third search space is determined in manners described below.

In a manner 1, the narrow band of the third search space is determined by the signaling.

As an option, a resource block set occupied by the third search space in the narrow band may be further determined by the signaling.

In a manner 2, the narrow band of the third search space is determined by a narrow band of the first search space.

The narrow band of the third search space corresponds to a frequency domain position of the third search space, and specifically, a narrow band where the third search space is located in frequency domain.

Furthermore, the narrow band of the third search space is determined by the narrow band of the first search space, including that the narrow band of the third search space is the same as the narrow band of the first search space. In this case, as an option, the resource block set occupied by the third search space in the narrow band is the same as a resource block set occupied by the first search space in the narrow band.

In an embodiment of the present invention, under a condition that the third search space conflicts with the first search space (i.e., the user equipment-specific search space), receiving the DCI in the third search space is abandoned. That is, a priority of receiving the DCI in the user equipment-specific search space is higher.

In an embodiment of the present invention, the time domain position of the second search space is determined in manners described below.

In a manner 1, the time domain position of the second search space is determined by the signaling. For example, a search space used as the second search space in the first search space (the user equipment-specific search space existing before the user equipment is triggered) is directly acquired by the signaling.

In a manner 2, the time domain position of the second search space is determined according to the time domain position of the first search space and the last one subframe allocated to the data packet (the ending subframe for sending the data packet). For example, the time domain position of the second search space is a first time domain position subsequent to a D1-th subframe after the ending subframe for sending the data packet among all time domain positions of the first search space; or the time domain position of the second search space is a first time domain position corresponding to the HARQ process of the data packet subsequent to the D1-th subframe after the ending subframe for sending the data packet among all the time domain positions of the first search space; or the time domain position of the second search space is first D2 consecutive time domain positions subsequent to the D1-th subframe after the ending subframe for sending the data packet among all the time domain positions of the first search space, where D1 and D2 are integers greater than 1.

In a manner 3, the time domain position of the second search space is determined according to the time domain position of the first search space and the subframe allocated to the data packet. For example, the time domain position of the second search space is a time domain position after a D3-th subframe allocated to the data packet and before a D4-th to last subframe allocated to the data packet among all the time domain positions of the first search space, where D3 and D4 are integers greater than 1.

In an embodiment of the present invention, for a half duplex (HD) frequency division duplex (FDD) system, the second search space and/or the third search space are located within an uplink gap of the user equipment (when the search space includes at least one of the second search space or the third search space). That is, the time domain positions of the second search space and/or the third search space are located within a time range from a starting moment of a first subframe within the uplink gap to an ending moment of a last one subframe within the uplink gap. It is to be noted that the uplink gap of the user equipment is a sending gap for a specified purpose defined during the user equipment sends the uplink data packet. It does not make any sense to define a gap in other time periods except when the uplink data packet is sent. For example, when the DCI is the DCI for the ACK feedback, since the user equipment in an HD-FDD mode cannot receive downlink data while sending the uplink data packet, a purpose of receiving the DCI is achieved only by introducing the uplink gap during the data packet is sent.

The uplink gap is a first uplink gap or a second uplink gap, where the first uplink gap is used by the user equipment for downlink time-frequency synchronization and exists before the user equipment is triggered to receive the DCI in the search space, and the second uplink gap is a newly-added uplink gap (relative to an existing uplink gap before the user equipment is triggered, for example, the first uplink gap). It is to be noted that under a condition that the uplink gap is the first uplink gap, the first uplink gap is not only used by the user equipment for the downlink time-frequency synchronization but also used by the user equipment to receive feedback; under a condition that the uplink gap is the second uplink gap, the second uplink gap is only used by the user equipment to receive the feedback.

A time domain position of the second uplink gap is determined in one of manners described below.

In a manner 1, the time domain position of the second uplink gap is determined by the signaling. For example, a starting subframe of the time domain position of the second uplink gap is directly acquired by the signaling.

In a manner 2, the time domain position of the second uplink gap starts from a first subframe after the first uplink gap (that is, the second uplink gap immediately follows the first uplink gap).

In a manner 3, a candidate time domain position of the second uplink gap is determined by the signaling, and the time domain position of the second uplink gap is determined by the candidate time domain position of the second uplink gap and the subframe allocated to the data packet. For example, the time domain position of the second uplink gap is a time domain position after an M1-th subframe allocated to the data packet and before an M2-th to last subframe allocated to the data packet among all candidate time domain positions, where M1 and M2 are integers greater than 3.

The candidate time domain position of the second uplink gap is determined by the signaling in one of manners described below.

A starting subframe and a size of the candidate time domain position of the second uplink gap are determined by the signaling.

The starting subframe of the candidate time domain position of the second uplink gap is determined by the signaling, and the size of the candidate time domain position of the second uplink gap is determined according to a size of the time domain position of the second search space or the third search space. For example, the size of the candidate time domain position of the second uplink gap is equal to the size of the time domain position of the second search space or the third search space plus a fixed integer (for example, the fixed integer may be 2).

In a specific example of the embodiment of the present invention, the specific example is directed to the HD-FDD system, and it is assumed that the data packet is the uplink data packet.

In this example, the network side device (for example, the base station) indicates the candidate time domain position by the signaling, and the user equipment may acquire the candidate time domain position by the signaling, where the candidate time domain position periodically appears, as shown in FIG. 9.

In this example, the time domain position of the second uplink gap is determined by the candidate time domain position and the subframe allocated to the data packet. Specifically, the time domain position of the second uplink gap is a time domain position after the third subframe allocated to the data packet and before the antepenultimate subframe allocated to the data packet among all the candidate time domain positions. Assuming that n1 is an integer less than 3 and n4 is an integer greater than 3, the time domain position of the second uplink gap is as shown in FIG. 9. Finally, in a sending process of the data packet, there are two second uplink gaps, the two second uplink gaps divide the sending process of the data packet into three segments, and the number of subframes allocated to each segment is n1+n2 + n3, n3 and n4 separately.

In FIGS. 2 to 9, n1, n2, n3 and n4 represent the number of subframes.

In a manner 4, the time domain position of the second uplink gap is determined by the number of subframes allocated to the data packet. For example, the time domain position of the second uplink gap starts from a first subframe after a y1*M3-th subframe allocated to the data packet, where y1 is a sequence which is 1, 2, ..., Y1-1, where Y1 is an integer greater than 1, and M3 is equal to N/Y1, where N represents the number of subframes allocated to the data packet. A value of Y1 is fixed or determined according to the number of subframes allocated to the data packet (i.e., the value of N).

In a specific example of the embodiment of the present invention, the specific example is directed to the HD-FDD system, and it is assumed that the data packet is the uplink data packet.

In this example, the time domain position of the second uplink gap is determined according to the number of subframes allocated to the data packet.

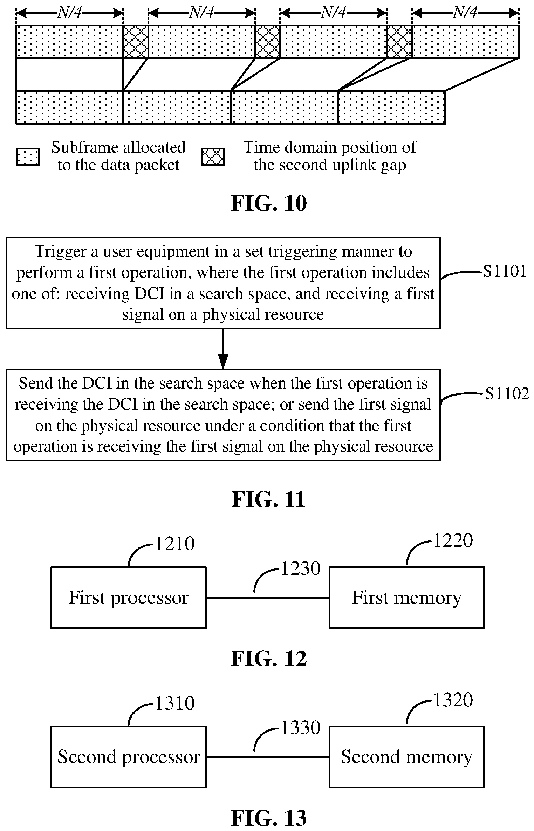

Specifically, three time domain positions of the second uplink gap start from a first subframe after a P-th subframe, a 2P-th subframe and a 3P-th subframe allocated to the data packet separately, where P is equal to N/4, and N represents the number of subframes allocated to the data packet, as shown in FIG. 10. Finally, in the sending process of the data packet, there are three second uplink gaps, the three second uplink gaps divide the sending process of the data packet into four segments, and the number of subframes allocated to each segment is N/4.

In a manner 5, the time domain position of the second uplink gap is determined according to the number of subframes allocated to the data packet and a number of subframes allocated to the second uplink gap. For example, the time domain position of the second uplink gap starts from a first subframe after a y2*M4-th subframe allocated to the data packet, where y2 is a sequence which is 1, 2, ..., Y2-1, where Y2 is an integer greater than 1, and M4 is equal to N/Y2, where N represents the number of subframes allocated to the data packet. A value of Y2 is determined according to the number of subframes allocated to the data packet (i.e., the value of N) and a number of subframes allocated to the time domain position of the second uplink gap (i.e., a size of the time domain position of the uplink gap).

It is to be noted that in the embodiments of the present invention, the size of the time domain position of the second uplink gap is equivalent to the number of subframes allocated to the second uplink gap. If not particularly indicated, the size of the time domain position of the second uplink gap is determined in one of manners described below.

The size of the time domain position of the second uplink gap is determined by the signaling.

The size of the time domain position of the second uplink gap is determined according to the size of the time domain position of the second search space or the third search space. For example, the size of the time domain position of the second uplink gap is equal to the size of the time domain position of the second search space or the third search space plus the fixed integer (for example, the fixed integer may be 2).

In an embodiment of the present invention, under a condition that the second uplink gap overlaps the first uplink gap, the user equipment abandons receiving the DCI in a search space within the second uplink gap or delays the second uplink gap. Under a condition that a manner of delaying the second uplink gap is used, the delayed second uplink gap may start from the first subframe after the first uplink gap.

In an embodiment of the present invention, under a condition that the uplink gap is the first uplink gap, at least one of the following is included.

Under a condition that the search space includes the third search space, the narrow band of the third search space includes 6 resource blocks in the center of system bandwidth (i.e., the narrow band of the third search space is the same as narrow bands for a transmission of a synchronization signal and a physical broadcast channel); a subframe for receiving the synchronization signal and/or the physical broadcast channel is not used for receiving the DCI (in an example in which the subframe for receiving the physical broadcast channel is not used for receiving the DCI, assuming that in a specified cell, subframe #0 and subframe #9 are used for receiving the physical broadcast channel, subframe #0 and subframe #9 are not used for receiving the DCI). The downlink time-frequency synchronization of the user equipment is mainly based on reception of the synchronization signal and the physical broadcast channel. The method helps to minimize influence on the reception of the synchronization signal and the physical broadcast channel while the DCI is received.

In an embodiment of the present invention, when the first operation is receiving the first signal on the physical resource, the first signal is one of: a first signal for the downlink time-frequency synchronization, a first signal for downlink channel measurement and channel estimation (i.e., the first signal may be regarded as a downlink reference signal), a first signal for the ACK feedback or a first signal for the NACK feedback.

It is to be noted that when the first signal is the first signal for the ACK feedback, the user equipment determines whether the ACK feedback is sent by whether the first signal has been detected on the physical resource. For example, if the user equipment has detected the first signal on the physical resource, the user equipment determines that the ACK feedback is sent.

Similarly, when the first signal is the first signal for the NACK feedback, the user equipment determines whether the NACK feedback is sent by whether the first signal has been detected on the physical resource. For example, if the user equipment has detected the first signal on the physical resource, the user equipment determines that the NACK feedback is sent.

In an embodiment of the present invention, when the first operation is receiving the first signal on the physical resource, the physical resource is located within the transmission period of the data packet, that is, a time domain position of the physical resource is located within the time range from the starting moment of the first subframe allocated to the data packet to the ending moment of the last subframe allocated to the data packet. When the first signal is the first signal for the ACK feedback, by the method, the ACK feedback may be received before the uplink data packet is sent on all the subframes according to the number of subframes allocated to the uplink data packet, so that the user equipment can stop sending the uplink data packet in advance, thereby reducing the unnecessary resource losses and the power losses of the user equipment.

In an embodiment of the present invention, the time domain position of the physical resource is located after the K1-th subframe allocated to the data packet and before the K2-th to last subframe allocated to the data packet, where K1 and K2 are integers greater than 1. For example, when the first signal is the first signal for the ACK feedback, when the network side device has not decoded the data packet, the user equipment has no need to monitor the ACK feedback, that is, the method considers the delay for decoding the data packet by the network side device.

In an embodiment of the present invention, the time domain position of the physical resource is determined in manners described below.

In a manner 1, the time domain position of the physical resource is determined by the signaling. For example, a starting subframe of the time domain position of the physical resource is directly acquired by the signaling.

In a manner 2, the time domain position of the physical resource is determined by the last one subframe allocated to the data packet (the ending subframe for sending the data packet). For example, the time domain position of the physical resource starts from the Q1-th subframe after the ending subframe for sending the data packet, where Q1 is an integer greater than 1.

In a manner 3, a candidate time domain position of the physical resource is determined by the signaling, and the time domain position of the physical resource is determined by the candidate time domain position and the last one subframe allocated to the data packet (the ending subframe for sending the data packet). For example, the time domain position of the physical resource is a first time domain position subsequent to the Q2-th subframe after the ending subframe for sending the data packet among all candidate time domain positions; or the time domain position of the physical resource is a first time domain position corresponding to the HARQ process of the data packet subsequent to the Q2-th subframe after the ending subframe for sending the data packet among all the candidate time domain positions; or the time domain position of the physical resource is first Q3 consecutive time domain positions subsequent to the Q2-th subframe after the ending subframe for sending the data packet among all the candidate time domain positions, where Q2 and Q3 are integers greater than 1.

Determining the candidate time domain position of the physical resource by the signaling includes determining a starting subframe and a size of the candidate time domain position of the physical resource by the signaling.

In a manner 4, the candidate time domain position of the physical resource is determined by the signaling, and the time domain position of the physical resource is determined by the candidate time domain position and the subframe allocated to the data packet.

For example, the time domain position of the physical resource is a time domain position after the P1-th subframe allocated to the data packet and before the P2-th to last subframe allocated to the data packet among all the candidate time domain positions, where P1 and P2 are integers greater than 1.

Determining the candidate time domain position of the physical resource by the signaling includes determining the starting subframe and the size of the candidate time domain position of the physical resource by the signaling.

In a manner 5, the time domain position of the physical resource is determined by the number of subframes allocated to the data packet.

For example, the time domain position of the physical resource starts from the (x1*P3+1)-th subframe allocated to the data packet, where x1 is the sequence which is 1, 2, ···, X1-1, where X1 is an integer greater than 1, and P3 is equal to N/X1, where N represents the number of subframes allocated to the data packet. The value of X1 is fixed or determined by the number of subframes allocated to the data packet (i.e., the value of N).

In a manner 6, the time domain position of the physical resource is determined by the number of subframes allocated to the data packet and a number of subframes allocated to the physical resource. For example, the time domain position of the physical resource starts from the (x2*P4+1)-th subframe allocated to the data packet, where x2 is the sequence which is 1, 2, ···, X2-1, where X2 is an integer greater than 1, and P4 is equal to N/X2, where N represents the number of subframes allocated to the data packet. The value of X2 is determined by the number of subframes allocated to the data packet (i.e., the value of N) and the number of subframes allocated to the physical resource (i.e., a size of the time domain position of the physical resource).

It is to be noted that in the embodiment of the present invention, the size of the time domain position of the physical resource is equivalent to the number of subframes allocated to the physical resource. If not particularly indicated, it may be considered that the size of the time domain position of the physical resource is determined by the signaling.

In an embodiment of the present invention, the physical resource occupies 1 resource block or 6 resource blocks (equivalent to 1 narrow band) in the frequency domain.

In an embodiment of the present invention, a position of the resource block occupied by the physical resource in the frequency domain is determined by the signaling.

In an embodiment of the present invention, under a condition that the physical resource conflicts with the user equipment-specific search space, the user equipment abandons receiving the first signal on the physical resource. That is, receiving the DCI in the user equipment-specific search space has a higher priority.

In an embodiment of the present invention, for HD-FDD, the physical resource is located within the uplink gap of the user equipment. That is, the time domain position of the physical resource is located within the time range from the starting moment of the first subframe within the uplink gap to the ending moment of the last subframe within the uplink gap. It is to be noted that the uplink gap of the user equipment is the sending gap for the specified purpose defined during the user equipment sends the uplink data packet. It does not make any sense to define the gap in other time periods except when the uplink data packet is sent. For example, when the first signal is the first signal for the ACK feedback, since the user equipment in the HD-FDD mode cannot receive the first signal while sending the uplink data packet, a purpose of receiving the first signal is achieved only by introducing the uplink gap during the data packet is sent.

The uplink gap is the first uplink gap or the second uplink gap, where the first uplink gap is used by the user equipment for the downlink time-frequency synchronization and exists before the user equipment is triggered to receive the first signal on the physical resource, and the second uplink gap is the newly-added uplink gap (relative to the existing uplink gap before the user equipment is triggered to receive the first signal on the physical resource, for example, the first uplink gap). It is to be noted that when the uplink gap is the first uplink gap, the first uplink gap is not only used by the user equipment for the downlink time-frequency synchronization but also used by the user equipment to receive the feedback; when the uplink gap is the second uplink gap, the second uplink gap is only used by the user equipment to receive the feedback.

The time domain position of the second uplink gap is determined in one of manners described below.

In the manner 1, the time domain position of the second uplink gap is determined by the signaling. For example, the starting subframe of the time domain position of the second uplink gap is directly acquired by the signaling.

In the manner 2, the time domain position of the second uplink gap starts from the first subframe after the first uplink gap (that is, the second uplink gap immediately follows the first uplink gap).

In the manner 3, the candidate time domain position of the second uplink gap is determined by the signaling, and the time domain position of the second uplink gap is determined by the candidate time domain position of the second uplink gap and the subframe allocated to the data packet. For example, the time domain position of the second uplink gap is the time domain position after the M1-th subframe allocated to the data packet and before the M2-th to last subframe allocated to the data packet among all the candidate time domain positions, where M1 and M2 are integers greater than 1.

The candidate time domain position of the second uplink gap is determined by the signaling in one of manners described below.

The starting subframe and the size of the candidate time domain position of the second uplink gap are determined by the signaling.

The starting subframe of the candidate time domain position of the second uplink gap is determined by the signaling, and the size of the candidate time domain position of the second uplink gap is determined according to the size of the time domain position of the physical resource. For example, the size of the candidate time domain position of the second uplink gap is equal to the size of the time domain position of the physical resource plus the fixed integer (for example, the fixed integer may be 2).

In the manner 4, the time domain position of the second uplink gap is determined by the number of subframes allocated to the data packet. For example, the time domain position of the second uplink gap starts from the first subframe after the y1*M3-th subframe allocated to the data packet, where y1 is the sequence which is 1, 2, ..., Y1-1, where Y1 is an integer greater than 1, and M3 is equal to N/Y1, where N represents the number of subframes allocated to the data packet. The value of Y1 is fixed or determined by the number of subframes allocated to the data packet (i.e., the value of N).

In the manner 5, the time domain position of the second uplink gap is determined by the number of subframes allocated to the data packet and the number of subframes allocated to the second uplink gap. For example, the time domain position of the second uplink gap starts from the first subframe after the y2*M4-th subframe allocated to the data packet, where y2 is the sequence which is 1, 2, ..., Y2-1, where Y2 is an integer greater than 1, and M4 is equal to N/Y2, where N represents the number of subframes allocated to the data packet. The value of Y2 is determined by the number of subframes allocated to the data packet (i.e., the value of N) and the number of subframes allocated to the time domain position of the second uplink gap (i.e., the size of the time domain position of the uplink gap).

It is to be noted that in the embodiments of the present invention, the size of the time domain position of the second uplink gap is equivalent to the number of subframes allocated to the second uplink gap. If not particularly indicated, the size of the time domain position of the second uplink gap is determined in one of manners described below.

The size of the time domain position of the second uplink gap is determined by the signaling.

The size of the time domain position of the second uplink gap is determined according to the size of the time domain position of the physical resource. For example, the size of the time domain position of the second uplink gap is equal to the size of the time domain position of the physical resource plus the fixed integer (for example, the fixed integer may be 2).

In an embodiment of the present invention, under a condition that the second uplink gap overlaps the first uplink gap, the user equipment abandons receiving the DCI in the search space within the second uplink gap or delays the second uplink gap. When the manner of delaying the second uplink gap is used, the delayed second uplink gap may start from the first subframe after the first uplink gap.

In an embodiment of the present invention, when the uplink gap is the first uplink gap, at least one of the following is included:
The resource block occupied by the physical resource in the frequency domain is located within a range of the 6 resource blocks in the center of system bandwidth (i.e., the resource block occupied by the physical resource is located within the narrow band for the transmission of the synchronization signal and the physical broadcast channel); the subframe for receiving the synchronization signal and/or the physical broadcast channel is not used for receiving the first signal (in an example in which the subframe for receiving the physical broadcast channel is not used for receiving the first signal, assuming that in the specified cell, subframe #0 and subframe #9 are used for receiving the physical broadcast channel, subframe #0 and subframe #9 are not used for receiving the first signal). The downlink time-frequency synchronization is mainly based on reception of the synchronization signal and the physical broadcast channel. The method helps to minimize the influence on the reception of the synchronization signal and the physical broadcast channel while the first signal is received.

When the physical resource occupies one resource block in the frequency domain, a length of a sequence corresponding to the first signal is an integer multiple of 12. For example, the length is equal to 12 or 132 (i.e., 12 increased by a factor of 11). When the physical resource occupies 6 resource blocks in the frequency domain, the length of the sequence corresponding to the first signal is an integer multiple of 72. For example, the length is equal to 72 or 792 (i.e., 72 increased by a factor of 11).

The sequence corresponding to the first signal is one of a PN sequence, a ZC sequence, a cyclic extended sequence of the ZC sequence, an M sequence, a Gold sequence or a product of the M sequence and the Gold sequence.

For example, the PN sequence is generated according to an identity of the user equipment.

For example, the ZC sequence is generated by determining a root index and a cyclic shift index according to the identity of the user equipment, or the ZC sequence is generated by indicating the root index and the cyclic shift index by the signaling.

For example, the ZC sequence is generated by determining the root index and the cyclic shift index according to the identity of the user equipment, or the ZC sequence is generated by determining the root index and the cyclic shift index by the signaling; and the cyclic extended sequence of the ZC sequence is determined according to the generated ZC sequence.

For example, the M sequence is determined according to the identity of the user equipment or by the signaling.

For example, the Gold sequence is determined according to the identity of the user equipment or by the signaling.

For example, the M sequence and the Gold sequence are determined according to the identity of the user equipment, or the M sequence and the Gold sequence are determined by the signaling.

It is to be noted that in the embodiments of the present invention, the transmission includes at least one of sending or receiving.

If not particularly indicated, the signaling includes at least one of: cell-specific (i.e., broadcast) system information block (SIB) signaling, user equipment-specific RRC message signaling or the signaling in the DCI.

The data packet includes the uplink data packet and a downlink data packet.

The number of subframes allocated to the data packet may be equivalent to the number of repeated transmissions of the data packet.

The subframe is also referred to as a transmission time interval (TTI).

The subframe (sometimes referred to as a timeslot or a mini-slot) corresponds to one transmission of the data packet, that is, the subframe is a size of a time domain resource allocated for one transmission of the data packet.

The size of the candidate time domain position is equivalent to the number of subframes occupied by the candidate time domain position, and the candidate time domain position occupies at least one subframe. The size of the time domain position is equivalent to the number of subframes occupied by the time domain position, and the time domain position occupies at least one subframe.

A size of a time domain position of the search space (i.e., the number of subframes occupied by the time domain position of the search space) is equivalent to a maximum number of repeated transmissions in the search space (represented as Rmax).

The subframe allocated to the data packet refers to a subframe practically used for the transmission of the data packet. The number of subframes allocated to the data packet refers to the number of subframes practically used for the transmission of the data packet.

In summary, in the embodiments of the present invention, after the network side triggers the user equipment in the set triggering manner, the DCI is received in the search space or the signal is received on the physical resource. This manner for receiving the DCI or the signal improves scheduling flexibility of the DCI and the signal and resource utilization efficiency.

### Embodiment 2

An embodiment of the present invention provides an information sending method applied to a network side device. The network side device may include, but is not limited to, a base station.

As shown in FIG. 11, the method in this embodiment includes steps described below.

In step S 1101, a user equipment is triggered in a set triggering manner to perform a first operation, where the first operation includes one of: receiving downlink control information (DCI) in a search space, or receiving a first signal on a physical resource.

In step S 1102, the DCI is sent in the search space when the first operation is receiving the DCI in the search space; or the first signal is sent on the physical resource when the first operation is receiving the first signal on the physical resource.

That is to say, with the method of the present invention, before sending the DCI or a signal, the network side device triggers the user equipment in the set manner to receive the DCI in the search space or receive the signal on the physical resource, and sends the DCI in the search space or sends the signal on the physical resource after the user equipment is triggered, improving scheduling flexibility of the DCI and the signal and resource utilization efficiency.

Objects, technical solutions and advantages of the present invention will be clearer from a detailed description of the embodiments of the present invention in conjunction with the drawings. It is to be noted that if not in collision, the features in this embodiment may be combined with each other.

In an embodiment of the present invention, in step S1101, the user equipment is triggered in the set triggering manner to perform the first operation where the set triggering manner includes one of manners described below.

In a triggering manner 1, the user equipment is triggered by a data packet to perform the first operation. In a specific embodiment of the present invention, a specific implementation process of this manner is triggering the user equipment by scheduling the data packet (equivalent to sending the user equipment the DCI for granting a resource for a transmission of a data packet of the user equipment) to perform the first operation.

In a triggering manner 2, the user equipment is triggered by a number of subframes allocated to the data packet to perform the first operation. In a specific embodiment of the present invention, a specific implementation process of this manner is triggering the user equipment by making the number of subframes allocated to the data packet reach a set threshold to perform the first operation.

In a triggering manner 3, the user equipment is triggered by a format of the DCI to perform the first operation. In a specific embodiment of the present invention, a specific implementation process of this manner is triggering the user equipment by setting the format of the DCI for a resource grant as a specified format to perform the first operation, where the specified format includes at least one of a format 6-0B or a format 6-1B of the DCI.

In a triggering manner 4, the user equipment is triggered by signaling in the DCI to perform the first operation. In a specific embodiment of the present invention, a specific implementation process of this manner is instructing the user equipment by the signaling in the DCI for the resource grant to perform the first operation. For example, a value of the signaling is set to 1 to instruct the user equipment to perform the first operation.

In a triggering manner 5, the user equipment is triggered by a transmission mode of the data packet to perform the first operation. In a specific embodiment of the present invention, a specific implementation process of this manner is triggering the user equipment by setting the transmission mode of the data packet as a specified transmission mode to perform the first operation, where the specified transmission mode includes, but is not limited to, a spatial multiplexing transmission mode or a spatial diversity transmission mode.

In a triggering manner 6, the user equipment is triggered by a second signal to perform the first operation. In a specific embodiment of the present invention, a specific implementation process of this manner is triggering the user equipment by delivering the second signal with a specified sequence on a specified time-frequency resource to perform the first operation. The sequence used by the second signal is preset or indicated by signaling, and the time-frequency resource occupied by the second signal is preset or indicated by the signaling.

In a triggering manner 7, the user equipment is triggered by a type of the data packet to perform the first operation. In a specific embodiment of the present invention, a specific implementation process of this manner is triggering the user equipment by scheduling a specified type of data packet to perform the first operation, where the specified type of data packet includes, but is not limited to, a data packet for confirming reception of a radio resource control (RRC) connection release message.

In a triggering manner 8, the user equipment is triggered by a subframe length (equivalent to duration) to perform the first operation. In a specific embodiment of the present invention, assuming that subframes with two lengths (a normal subframe and a short subframe) exist in a system, a specific implementation process of this manner is triggering the user equipment by scheduling the short subframe to perform the first operation. Scheduling the short subframe is equivalent to scheduling the transmission of the data packet on the short subframe.

In an embodiment of the present invention, when the first operation is receiving the DCI in the search space, the DCI includes at least one of: DCI for the resource grant, DCI for power control, DCI for acknowledgement (ACK) feedback, or DCI for negative acknowledgement (NACK) feedback.

The DCI for the resource grant includes at least one of: DCI for granting a resource to a new data packet or DCI for granting a resource for a retransmission of the data packet.

The DCI for granting the resource to the new data packet is not only used for granting the resource to the new data packet but also used for providing the ACK feedback for a last data packet using a same HARQ procedure. For a specific example, reference may be made to the description of this part in a first embodiment.

The DCI for the ACK feedback and/or the NACK feedback includes at least one of: common DCI or user equipment-specific DCI.

The common DCI carries feedback for multiple user equipments, and the user equipment-specific DCI carries feedback for the unique user equipment, where the feedback is the ACK feedback or the NACK feedback.

The user equipment-specific DCI for the ACK feedback includes features described below.

A payload of the user equipment-specific DCI is all 1. For example, if the payload includes 16 bits, the 16 bits all take a value of 1. In this case, when the user equipment detects the user equipment-specific DCI whose payload is all 1, it is considered that the user equipment has received the ACK feedback.

The user equipment-specific DCI for the NACK feedback includes features described below.

A payload of the user equipment-specific DCI is all 1. For example, if the payload includes 16 bits, the 16 bits all take a value of 1. In this case, when the user equipment detects the user equipment-specific DCI whose payload is all 1, it is considered that the user equipment has received the NACK feedback.

In this embodiment, an available control channel element set for the common DCI is determined in one of manners described below.

In a manner 1, the available control channel element set is preset.

In a manner 2, the available control channel element set is indicated by the signaling.

At least one available control channel element set exists.

In this embodiment, positions of the ACK feedback and/or the NACK feedback in the common DCI (i.e., bits in the common DCI corresponding to the ACK feedback and/or the NACK feedback) are determined in one of manners described below.

In a manner 1, the positions of the ACK feedback and/or the NACK feedback in the common DCI are indicated by the signaling.

In a manner 2, the positions of the ACK feedback and/or the NACK feedback in the common DCI are determined according to a frequency domain resource allocated to the data packet, where the frequency domain resource includes at least one of: a resource block and a narrow band. For details, reference may be made to the description of examples in this part of the first embodiment.

In this embodiment, a radio network temporal identity (RNTI) for cyclic redundancy check (CRC) scrambling of the common DCI is preset or indicated by the signaling.

Furthermore, in an embodiment of the present invention, when the first operation is receiving the DCI in the search space, the search space includes at least one of: a first search space, a second search space or a third search space.

The first search space is a user equipment-specific search space (USS). (The user equipment-specific search space is an existing search space before the user equipment is triggered to receive the DCI in the search space.) The second search space is a subset of the USS (i.e., the first search space). The third search space is a newly-added user equipment-specific search space or a newly-added common search space (relative to the existing search space before the user equipment is triggered to receive the DCI in the search space).

It is be noted that the user equipment-specific search space means that the DCI received in this search space is all the user equipment-specific DCI, and the common search space means that the DCI received in this search space is the common DCI (the common DCI includes information sent to multiple user equipments).

In an embodiment of the present invention, the second search space and/or the third search space are located within a transmission period of the data packet, that is, time domain positions of the second search space and/or the third search space are located within a time range from a starting moment of a first subframe allocated to the data packet to an ending moment of a last subframe allocated to the data packet. When the DCI is the DCI for the ACK feedback, by the method, the ACK feedback may be received before an uplink data packet is sent on all subframes according to the number of subframes allocated to the uplink data packet, so that the user equipment can stop sending the uplink data packet in advance, thereby reducing unnecessary resource losses and power losses of the user equipment.

Specifically, in this embodiment, when the second search space and/or the third search space are located within the transmission period of the data packet, as a preferred implementation manner, the time domain positions of the second search space and/or the third search space are located after a K1-th subframe allocated to the data packet and before a K2-th to last subframe allocated to the data packet, where K1 and K2 are integers greater than 1. For example, when the DCI is the DCI for the ACK feedback, when the network side device has not decoded the data packet, the user equipment has no need to monitor the ACK feedback, that is, the method considers a delay for decoding the data packet by the network side device.

In an embodiment of the present invention, the time domain position of the third search space is determined in one of manners described below.

In a manner 1, the time domain position of the third search space is indicated by the signaling. For example, a starting subframe of the time domain position of the third search space is directly indicated by the signaling.

In a manner 2, the time domain position of the third search space is determined by the last one subframe allocated to the data packet (an ending subframe for sending the data packet). For example, the time domain position of the third search space starts from a Q1-th subframe after the ending subframe for sending the data packet, where Q1 is an integer greater than 1. For a specific implementation process of this manner, reference may be made to the description of examples in this part of the first embodiment.

In a manner 3, a candidate time domain position of the third search space is indicated by the signaling, and the time domain position of the third search space is determined by the candidate time domain position and the last one subframe allocated to the data packet (the ending subframe for sending the data packet). For example, the time domain position of the third search space is a first time domain position subsequent to a Q2-th subframe after the ending subframe for sending the data packet among all candidate time domain positions; or the time domain position of the third search space is a first time domain position corresponding to the HARQ process of the data packet subsequent to the Q2-th subframe after the ending subframe for sending the data packet among all the candidate time domain positions; or the time domain position of the third search space is first Q3 consecutive time domain positions subsequent to the Q2-th subframe after the ending subframe for sending the data packet among all the candidate time domain positions, where Q2 and Q3 are integers greater than 1. For a specific implementation process of this manner, reference may be made to the description of examples in this part of the first embodiment.

The candidate time domain position of the third search space is indicated by the signaling in one of manners described below.

A starting subframe and a size of the candidate time domain position of the third search space are indicated by the signaling.

The starting subframe of the candidate time domain position of the third search space is indicated by the signaling, and a preset size of the candidate time domain position of the third search space is employed. For example, it is preset that the size of the candidate time domain position of the third search space is equal to a size of a time domain position of the first search space (i.e., the user equipment-specific search space).

In a manner 4, the candidate time domain position of the third search space is indicated by the signaling, and the time domain position of the third search space is determined by the candidate time domain position and a subframe allocated to the data packet. For example, the time domain position of the third search space is a time domain position after a P1-th subframe allocated to the data packet and before a P2-th to last subframe allocated to the data packet among all the candidate time domain positions, where P1 and P2 are integers greater than 1. For a specific implementation process of this manner, reference may be made to the description of examples in this part of the first embodiment.

The candidate time domain position of the third search space is indicated by the signaling in one of manners described below.

The starting subframe and the size of the candidate time domain position of the third search space are indicated by the signaling.

The starting subframe of the candidate time domain position of the third search space is indicated by the signaling, and the preset size of the candidate time domain position of the third search space is employed. For example, it is preset that the size of the candidate time domain position of the third search space is equal to the size of the time domain position of the first search space (i.e., the user equipment-specific search space).

In a manner 5, the time domain position of the third search space is determined by the number of subframes allocated to the data packet. For example, the time domain position of the third search space starts from a (x1*P3+1)-th subframe allocated to the data packet, where x1 is a sequence which is 1, 2, ..., X1-1, where X1 is an integer greater than 1, and P3 is equal to N/X1, where N represents the number of subframes allocated to the data packet. A value of X1 is fixed or determined by the number of subframes allocated to the data packet (i.e., a value of N). For a specific implementation process of this manner, reference may be made to the description of examples in this part of the first embodiment.

In a manner 6, the time domain position of the third search space is determined by the number of subframes allocated to the data packet and a number of subframes allocated to the third search space. For example, the time domain position of the third search space starts from a (x2*P4+1)-th subframe allocated to the data packet, where x2 is a sequence which is 1, 2, ..., X2-1, where X2 is an integer greater than 1, and P4 is equal to N/X2, where N represents the number of subframes allocated to the data packet. A value of X2 is determined by the number of subframes allocated to the data packet (i.e., the value of N) and the number of subframes allocated to the third search space (i.e., a size of the time domain position of the third search space). For a specific implementation process of this manner, reference may be made to the description of examples in this part of the first embodiment.

In a manner 7, the time domain position of the first search space is used as the candidate time domain position of the third search space, and the time domain position of the third search space is determined by the candidate time domain position and the last one subframe allocated to the data packet (i.e., the ending subframe for sending the data packet). This manner is similar to the manner 3 and only differs from the manner 3 in that the candidate time domain position of the third search space is determined in different manners. For a specific example, reference may be made to the description of the example in the manner 3.

In a manner 8, the time domain position of the first search space is used as the candidate time domain position of the third search space, and the time domain position of the third search space is determined by the candidate time domain position and the subframe allocated to the data packet. This manner is similar to the manner 4 and only differs from the manner 4 in that the candidate time domain position of the third search space is determined in different manners. For a specific example, reference may be made to the description of the example in the manner 4.

It is to be noted that in the embodiments of the present invention, the size of the time domain position of the third search space is equivalent to the number of subframes allocated to the third search space. If not particularly indicated, the size of the time domain position of the third search space is determined in one of manners described below.

The size of the time domain position of the third search space is indicated by the signaling.

A preset size of the time domain position of the third search space is employed. For example, it is preset that the size of the candidate time domain position of the third search space is equal to the size of the time domain position of the first search space (i.e., the user equipment-specific search space).

In an embodiment of the present invention, a narrow band of the third search space is determined in one of manners described below.

In a manner 1, the narrow band of the third search space is indicated by the signaling.

As an option, a resource block set occupied by the third search space in the narrow band may be further indicated by the signaling.

In a manner 2, the narrow band of the third search space is determined by a narrow band of the first search space.

The narrow band of the third search space is determined by the narrow band of the first search space, including that the narrow band of the third search space is the same as the narrow band of the first search space. In this case, as an option, the resource block set occupied by the third search space in the narrow band is the same as a resource block set occupied by the first search space in the narrow band.

In an embodiment of the present invention, when the third search space conflicts with the first search space (i.e., the user equipment-specific search space), the network side device abandons sending the DCI in the third search space. That is, sending the DCI in the user equipment-specific search space has a higher priority.

In an embodiment of the present invention, the time domain position of the second search space is determined in manners described below.

In a manner 1, the time domain position of the second search space is indicated by the signaling. For example, a search space used as the second search space in the first search space (the user equipment-specific search space existing before the user equipment is triggered) is directly indicated by the signaling.

In a manner 2, the time domain position of the second search space is determined according to the time domain position of the first search space and the last one subframe allocated to the data packet (the ending subframe for sending the data packet). For example, the time domain position of the second search space is a first time domain position subsequent to a D1-th subframe after the ending subframe for sending the data packet among all time domain positions of the first search space; or the time domain position of the second search space is a first time domain position corresponding to the HARQ process of the data packet subsequent to the D1-th subframe after the ending subframe for sending the data packet among all the time domain positions of the first search space; or the time domain position of the second search space is first D2 consecutive time domain positions subsequent to the D1-th subframe after the ending subframe for sending the data packet among all the time domain positions of the first search space, where D1 and D2 are integers greater than 1.

In a manner 3, the time domain position of the second search space is determined according to the time domain position of the first search space and the subframe allocated to the data packet. For example, the time domain position of the second search space is a time domain position after a D3-th subframe allocated to the data packet and before a D4-th to last subframe allocated to the data packet among all the time domain positions of the first search space, where D3 and D4 are integers greater than 1.

In an embodiment of the present invention, for a half-duplex frequency division duplex (HD-FDD) system, the second search space and/or the third search space are located within an uplink gap of the user equipment (when the search space includes at least one of the second search space or the third search space). That is, the time domain positions of the second search space and/or the third search space are located within a time range from a starting moment of a first subframe within the uplink gap to an ending moment of a last subframe within the uplink gap. It is to be noted that the uplink gap of the user equipment is the sending gap for the specified purpose defined during the user equipment sends the uplink data packet. It does not make any sense to define the gap in other time periods except when the uplink data packet is sent. For example, when the DCI is the DCI for the ACK feedback, since the user equipment in an HD-FDD mode cannot receive downlink data while sending the uplink data packet, a purpose of receiving the DCI is achieved only by introducing the uplink gap during the data packet is sent.

In an embodiment of the present invention, the uplink gap is a first uplink gap or a second uplink gap, where the first uplink gap is used by the user equipment for downlink time-frequency synchronization, and the second uplink gap is a newly-added uplink gap (relative to an existing uplink gap before the user equipment is triggered, for example, the first uplink gap). It is to be noted that when the uplink gap is the first uplink gap, the first uplink gap is not only used by the user equipment for the downlink time-frequency synchronization but also used by the user equipment to receive feedback; when the uplink gap is the second uplink gap, the second uplink gap is only used by the user equipment to receive the feedback.

In an embodiment of the present invention, the time domain position of the second uplink gap is determined in one of manners described below.

In a manner 1, the time domain position of the second uplink gap is indicated by the signaling. For example, a starting subframe of the time domain position of the second uplink gap is directly indicated by the signaling.

In a manner 2, the time domain position of the second uplink gap starts from a first subframe after the first uplink gap (that is, the second uplink gap immediately follows the first uplink gap).

In a manner 3, a candidate time domain position of the second uplink gap is indicated by the signaling, and the time domain position of the second uplink gap is determined by the candidate time domain position of the second uplink gap and the subframe allocated to the data packet. For example, the time domain position of the second uplink gap is a time domain position after an M1-th subframe allocated to the data packet and before an M2-th to last subframe allocated to the data packet among all candidate time domain positions, where M1 and M2 are integers greater than 3. For a specific implementation process of this manner, reference may be made to the description of examples in this part of the first embodiment.

The candidate time domain position of the second uplink gap is indicated by the signaling in one of manners described below.

A starting subframe and a size of the candidate time domain position of the second uplink gap are indicated by the signaling.

The starting subframe of the candidate time domain position of the second uplink gap is indicated by the signaling, and the size of the candidate time domain position of the second uplink gap is determined according to a size of the time domain position of the second search space or the third search space. For example, the size of the candidate time domain position of the second uplink gap is equal to the size of the time domain position of the second search space or the third search space plus a fixed integer (for example, the fixed integer may be 2).

In a manner 4, the time domain position of the second uplink gap is determined by the number of subframes allocated to the data packet. For example, the time domain position of the second uplink gap starts from a first subframe after a y1*M3-th subframe allocated to the data packet, where y1 is a sequence which is 1, 2, ..., Y1-1, where Y1 is an integer greater than 1, and M3 is equal to N/Y1, where N represents the number of subframes allocated to the data packet. A value of Y1 is fixed or determined by the number of subframes allocated to the data packet (i.e., the value of N). For a specific implementation process of this manner, reference may be made to the description of examples in this part of the first embodiment.

In a manner 5, the time domain position of the second uplink gap is determined by the number of subframes allocated to the data packet and a number of subframes allocated to the second uplink gap. For example, the time domain position of the second uplink gap starts from a first subframe after a y2*M4-th subframe allocated to the data packet, where y2 is a sequence which is 1, 2, ..., Y2-1, where Y2 is an integer greater than 1, and M4 is equal to N/Y2, where N represents the number of subframes allocated to the data packet. A value of Y2 is determined by the number of subframes allocated to the data packet (i.e., the value of N) and a number of subframes allocated to the time domain position of the second uplink gap (i.e., a size of the time domain position of the uplink gap).

It is to be noted that in the embodiments of the present invention, the size of the time domain position of the second uplink gap is equivalent to the number of subframes allocated to the second uplink gap. If not particularly indicated, the size of the time domain position of the second uplink gap is determined in one of manners described below.

The size of the time domain position of the second uplink gap is indicated by the signaling.

The size of the time domain position of the second uplink gap is determined according to the size of the time domain position of the second search space or the third search space. For example, the size of the time domain position of the second uplink gap is equal to the size of the time domain position of the second search space or the third search space plus the fixed integer (for example, the fixed integer may be 2).

In this embodiment, when the second uplink gap overlaps the first uplink gap, the network side device abandons sending the DCI in a search space within the second uplink gap or delays the second uplink gap. When a manner of delaying the second uplink gap is used, the delayed second uplink gap may start from the first subframe after the first uplink gap.

In this embodiment, when the uplink gap is the first uplink gap, at least one of the following is included:
When the search space includes the third search space, the narrow band of the third search space includes 6 resource blocks in the center of system bandwidth (i.e., the narrow band of the third search space is the same as a narrow band for a transmission of a synchronization signal and a physical broadcast channel); a subframe for sending the synchronization signal and/or the physical broadcast channel is not used for sending the DCI (in an example in which the subframe for sending the physical broadcast channel is not used for sending the DCI, assuming that in a specified cell, subframe #0 and subframe #9 are used for sending the physical broadcast channel, subframe #0 and subframe #9 are not used for sending the DCI). The downlink time-frequency synchronization of the user equipment is mainly based on reception of the synchronization signal and the physical broadcast channel. The method helps to minimize influence on the reception of the synchronization signal and the physical broadcast channel while the DCI is received.

In an embodiment of the present invention, when the first operation is receiving the first signal on the physical resource, the first signal is one of: a first signal for the downlink time-frequency synchronization, a first signal for downlink channel measurement and channel estimation (i.e., the first signal may be regarded as a downlink reference signal), a first signal for the ACK feedback or a first signal for the NACK feedback.

It is to be noted that under a condition that the first signal is the first signal for the ACK feedback, the user equipment determines whether the ACK feedback is sent by whether the first signal has been detected on the physical resource. For example, if the user equipment has detected the first signal on the physical resource, the user equipment determines that the ACK feedback is sent. Similarly, when the first signal is the first signal for the NACK feedback, the user equipment determines whether the NACK feedback is sent by whether the first signal has been detected on the physical resource. For example, if the user equipment has detected the first signal on the physical resource, the user equipment determines that the NACK feedback is sent.

In an embodiment of the present invention, when the first operation is receiving the first signal on the physical resource, the physical resource is located within the transmission period of the data packet, that is, a time domain position of the physical resource is located within the time range from the starting moment of the first subframe allocated to the data packet to the ending moment of the last subframe allocated to the data packet. When the first signal is the first signal for the ACK feedback, by the method, the ACK feedback may be received before the uplink data packet is sent on all the subframes according to the number of subframes allocated to the uplink data packet, so that the user equipment can stop sending the uplink data packet in advance, thereby reducing the unnecessary resource losses and the power losses of the user equipment.

In an embodiment of the present invention, the time domain position of the physical resource is located after the K1-th subframe allocated to the data packet and before the K2-th to last subframe allocated to the data packet, where K1 and K2 are integers greater than 1. For example, when the first signal is the first signal for the ACK feedback, when the network side device has not decoded the data packet, the user equipment has no need to monitor the ACK feedback, that is, the method considers the delay for decoding the data packet by the network side device.

In an embodiment of the present invention, the time domain position of the physical resource is determined in manners described below.

In a manner 1, the time domain position of the physical resource is indicated by the signaling. For example, a starting subframe of the time domain position of the physical resource is directly indicated by the signaling.

In a manner 2, the time domain position of the physical resource is determined by the last one subframe allocated to the data packet (the ending subframe for sending the data packet). For example, the time domain position of the physical resource starts from the Q1-th subframe after the ending subframe for sending the data packet, where Q1 is an integer greater than 1.

In a manner 3, a candidate time domain position of the physical resource is indicated by the signaling, and the time domain position of the physical resource is determined by the candidate time domain position and the last one subframe allocated to the data packet (the ending subframe for sending the data packet). For example, the time domain position of the physical resource is a first time domain position subsequent to the Q2-th subframe after the ending subframe for sending the data packet among all candidate time domain positions; or the time domain position of the physical resource is a first time domain position corresponding to the HARQ process of the data packet subsequent to the Q2-th subframe after the ending subframe for sending the data packet among all the candidate time domain positions; or the time domain position of the physical resource is first Q3 consecutive time domain positions subsequent to the Q2-th subframe after the ending subframe for sending the data packet among all the candidate time domain positions, where Q2 and Q3 are integers greater than 1.

Indicating the candidate time domain position of the physical resource by the signaling includes indicating a starting subframe and a size of the candidate time domain position of the physical resource by the signaling.

In a manner 4, the candidate time domain position of the physical resource is indicated by the signaling, and the time domain position of the physical resource is determined by the candidate time domain position and the subframe allocated to the data packet.

For example, the time domain position of the physical resource is a time domain position after the P1-th subframe allocated to the data packet and before the P2-th to last subframe allocated to the data packet among all the candidate time domain positions, where P1 and P2 are integers greater than 1.

Indicating the candidate time domain position of the physical resource by the signaling includes indicating the starting subframe and the size of the candidate time domain position of the physical resource by the signaling.

In a manner 5, the time domain position of the physical resource is determined by the number of subframes allocated to the data packet.

For example, the time domain position of the physical resource starts from the (x1*P3+1)-th subframe allocated to the data packet, where x1 is the sequence which is 1, 2, ···, X1-1, where X1 is an integer greater than 1, and P3 is equal to N/X1, where N represents the number of subframes allocated to the data packet. The value of X1 is fixed or determined by the number of subframes allocated to the data packet (i.e., the value of N).

In a manner 6, the time domain position of the physical resource is determined by the number of subframes allocated to the data packet and a number of subframes allocated to the physical resource. For example, the time domain position of the physical resource starts from the (x2*P4+1)-th subframe allocated to the data packet, where x2 is the sequence which is 1, 2, ···, X2-1, where X2 is an integer greater than 1, and P4 is equal to N/X2, where N represents the number of subframes allocated to the data packet. The value of X2 is determined by the number of subframes allocated to the data packet (i.e., the value of N) and the number of subframes allocated to the physical resource (i.e., a size of the time domain position of the physical resource).

It is to be noted that in the embodiment of the present invention, the size of the time domain position of the physical resource is equivalent to the number of subframes allocated to the physical resource. If not particularly indicated, it may be considered that the size of the time domain position of the physical resource is indicated by the signaling.

In an embodiment of the present invention, the physical resource occupies 1 resource block or 6 resource blocks (equivalent to 1 narrow band) in the frequency domain.

In an embodiment of the present invention, a position of the resource block occupied by the physical resource in the frequency domain is indicated by the signaling.

In an embodiment of the present invention, when the physical resource conflicts with the user equipment-specific search space, the network side device abandons sending the first signal on the physical resource. That is, sending the DCI in the user equipment-specific search space is a higher priority.

In an embodiment of the present invention, for HD-FDD, the physical resource is located within the uplink gap of the user equipment. That is, the time domain position of the physical resource is located within the time range from the starting moment of the first subframe within the uplink gap to the ending moment of the last subframe within the uplink gap. It is to be noted that the uplink gap of the user equipment is the sending gap for the specified purpose defined during the user equipment sends the uplink data packet. It does not make any sense to define the gap in other time periods except when the uplink data packet is sent. For example, when the first signal is the first signal for the ACK feedback, since the user equipment in the HD-FDD mode cannot receive the first signal while sending the uplink data packet, a purpose of receiving the first signal is achieved only by introducing the uplink gap during the data packet is sent.

The uplink gap is the first uplink gap or the second uplink gap, where the first uplink gap is used by the user equipment for the downlink time-frequency synchronization and exists before the user equipment is triggered to receive the first signal on the physical resource, and the second uplink gap is the newly-added uplink gap (relative to the existing uplink gap before the user equipment is triggered to receive the first signal on the physical resource, for example, the first uplink gap). It is to be noted that when the uplink gap is the first uplink gap, the first uplink gap is not only used by the user equipment for the downlink time-frequency synchronization but also used by the user equipment to receive the feedback; when the uplink gap is the second uplink gap, the second uplink gap is only used by the user equipment to receive the feedback.

The time domain position of the second uplink gap is determined in one of manners described below.

In the manner 1, the time domain position of the second uplink gap is indicated by the signaling. For example, the starting subframe of the time domain position of the second uplink gap is directly indicated by the signaling.

In the manner 2, the time domain position of the second uplink gap starts from the first subframe after the first uplink gap (that is, the second uplink gap immediately follows the first uplink gap).

In the manner 3, the candidate time domain position of the second uplink gap is indicated by the signaling, and the time domain position of the second uplink gap is determined by the candidate time domain position of the second uplink gap and the subframe allocated to the data packet. For example, the time domain position of the second uplink gap is the time domain position after the M1-th subframe allocated to the data packet and before the M2-th to last subframe allocated to the data packet among all the candidate time domain positions, where M1 and M2 are integers greater than 1.

The candidate time domain position of the second uplink gap is indicated by the signaling in one of manners described below.

The starting subframe and the size of the candidate time domain position of the second uplink gap are indicated by the signaling.

The starting subframe of the candidate time domain position of the second uplink gap is indicated by the signaling, and the size of the candidate time domain position of the second uplink gap is determined according to the size of the time domain position of the physical resource. For example, the size of the candidate time domain position of the second uplink gap is equal to the size of the time domain position of the physical resource plus the fixed integer (for example, the fixed integer may be 2).

In the manner 4, the time domain position of the second uplink gap is determined by the number of subframes allocated to the data packet. For example, the time domain position of the second uplink gap starts from the first subframe after the y1*M3-th subframe allocated to the data packet, where y1 is the sequence which is 1, 2, ..., Y1-1, where Y1 is an integer greater than 1, and M3 is equal to N/Y1, where N represents the number of subframes allocated to the data packet. The value of Y1 is fixed or determined by the number of subframes allocated to the data packet (i.e., the value of N).

In the manner 5, the time domain position of the second uplink gap is determined by the number of subframes allocated to the data packet and the number of subframes allocated to the second uplink gap. For example, the time domain position of the second uplink gap starts from the first subframe after the y2*M4-th subframe allocated to the data packet, where y2 is the sequence which is 1, 2, ..., Y2-1, where Y2 is an integer greater than 1, and M4 is equal to N/Y2, where N represents the number of subframes allocated to the data packet. The value of Y2 is determined by the number of subframes allocated to the data packet (i.e., the value of N) and the number of subframes allocated to the time domain position of the second uplink gap (i.e., the size of the time domain position of the uplink gap).

It is to be noted that in the embodiments of the present invention, the size of the time domain position of the second uplink gap is equivalent to the number of subframes allocated to the second uplink gap. If not particularly indicated, the size of the time domain position of the second uplink gap is determined in one of manners described below.

The size of the time domain position of the second uplink gap is indicated by the signaling.

The size of the time domain position of the second uplink gap is determined according to the size of the time domain position of the physical resource. For example, the size of the time domain position of the second uplink gap is equal to the size of the time domain position of the physical resource plus the fixed integer (for example, the fixed integer may be 2).

In an embodiment of the present invention, when the second uplink gap overlaps the first uplink gap, the network side device abandons sending the DCI in the search space within the second uplink gap or delays the second uplink gap. When the manner of delaying the second uplink gap is used, the delayed second uplink gap may start from the first subframe after the first uplink gap.

In an embodiment of the present invention, when the uplink gap is the first uplink gap, at least one of the following is included.

The resource block occupied by the physical resource in the frequency domain is located within a range of the 6 resource blocks in the center of system bandwidth (i.e., the resource block occupied by the physical resource is located within the narrow band for the transmission of the synchronization signal and the physical broadcast channel); the subframe for sending the synchronization signal and/or the physical broadcast channel is not used for sending the first signal (in an example in which the subframe for sending the physical broadcast channel is not used for sending the first signal, assuming that in the specified cell, subframe #0 and subframe #9 are used for sending the physical broadcast channel, subframe #0 and subframe #9 are not used for sending the first signal). The downlink time-frequency synchronization is mainly based on reception of the synchronization signal and the physical broadcast channel. The method helps to minimize the influence on the reception of the synchronization signal and the physical broadcast channel while the first signal is received.

When the physical resource occupies one resource block in the frequency domain, a length of a sequence corresponding to the first signal is an integer multiple of 12. For example, the length is equal to 12 or 132 (i.e., 12 increased by a factor of 11). When the physical resource occupies 6 resource blocks in the frequency domain, the length of the sequence corresponding to the first signal is an integer multiple of 72. For example, the length is equal to 72 or 792 (i.e., 72 increased by a factor of 11).

The sequence corresponding to the first signal is one of a PN sequence, a ZC sequence, a cyclic extended sequence of the ZC sequence, an M sequence, a Gold sequence or a product of the M sequence and the Gold sequence.

For example, the PN sequence is generated according to an identity of the user equipment.

For example, the ZC sequence is generated by determining a root index and a cyclic shift index according to the identity of the user equipment, or the ZC sequence is generated by indicating the root index and the cyclic shift index by the signaling.

For example, the ZC sequence is generated by determining the root index and the cyclic shift index according to the identity of the user equipment, or the ZC sequence is generated by indicating the root index and the cyclic shift index by the signaling; and the cyclic extended sequence of the ZC sequence is determined according to the generated ZC sequence.

For example, the M sequence is indicated according to the identity of the user equipment or by the signaling.

For example, the Gold sequence is indicated according to the identity of the user equipment or by the signaling.

For example, the M sequence and the Gold sequence are determined according to the identity of the user equipment, or the M sequence and the Gold sequence are indicated by the signaling.

It is to be noted that in the embodiments of the present invention, the transmission includes at least one of sending or receiving.

If not particularly indicated, the signaling includes at least one of: cell-specific (i.e., broadcast) system information block (SIB) signaling, user equipment-specific RRC message signaling or the signaling in the DCI.

The data packet includes the uplink data packet and a downlink data packet.

The number of subframes allocated to the data packet may be equivalent to the number of repeated transmissions of the data packet.

The subframe is also referred to as a transmission time interval (TTI).

The subframe (sometimes referred to as a timeslot or a mini-slot) corresponds to one transmission of the data packet, that is, the subframe is a size of a time domain resource allocated for one transmission of the data packet.

The size of the candidate time domain position is equivalent to the number of subframes occupied by the candidate time domain position, and the candidate time domain position occupies at least one subframe. The size of the time domain position is equivalent to the number of subframes occupied by the time domain position, and the time domain position occupies at least one subframe.

A size of a time domain position of the search space (i.e., the number of subframes occupied by the time domain position of the search space) is equivalent to a maximum number of repeated transmissions in the search space (represented as Rmax).

The subframe allocated to the data packet refers to a subframe practically used for the transmission of the data packet. The number of subframes allocated to the data packet refers to the number of subframes practically used for the transmission of the data packet.

It is to be noted that the embodiments of the present invention provides the information sending method corresponding to the information receiving method in the embodiment 1. Since the triggering manner, the DCI, the search space and the like have been specifically described in detail in the embodiment 1, this embodiment only provides a simple description of implementation processes of the network side device. For related information, reference is made to the description of the method in the embodiment 1.

In summary, with the method in the embodiments of the present invention, before sending the DCI or a signal, the network side device triggers the user equipment in the set manner to receive the DCI in the search space or receive the signal on the physical resource, and sends the DCI in the search space or sends the signal on the physical resource after the user equipment is triggered, improving scheduling flexibility of the DCI and the signal and resource utilization efficiency.

### Embodiment 3

An embodiment of the present invention provides a user equipment. As shown in FIG. 12, the user equipment includes a first processor 1210, a first memory 1220 and a communication bus 1230, where the communication bus 1230 is configured to achieve a connection communication between the first processor 1210 and the first memory 1220.

The first processor 1210 is configured to execute information receiving programs stored in the first memory 1220 to perform steps of the method in the embodiment 1.

A detailed description of the steps of the method has been provided in the embodiment 1 and thus is not repeated in this embodiment.

### Embodiment 4

An embodiment of the present invention provides an information sending device. As shown in FIG. 13, the information sending device includes a second processor 1310, a second memory 1320 and a communication bus 1330, where the communication bus 1330 is configured to achieve a connection communication between the second processor 1310 and the second memory 1320.

The second processor 1310 is configured to execute information sending programs stored in the second memory 1320 to perform steps of the method in the embodiment 2.

A detailed description of the steps of the method has been provided in the embodiment 2 and thus is not repeated in this embodiment.

### Embodiment 5

An embodiment of the present invention provides a computer-readable storage medium, which is configured to store information receiving programs which, when executed by a processor, implement steps of the information receiving method in the embodiment 1.

An embodiment of the present invention provides another computer-readable storage medium, which is configured to store information sending programs which, when executed by a processor, implement steps of the information sending method in the embodiment 2.

Detailed descriptions of the steps of the methods have been provided in the embodiments 1 and 2 and thus are not repeated in this embodiment.

### Embodiment 6

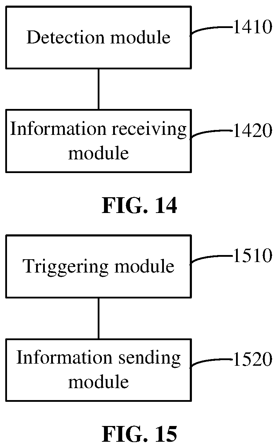

An embodiment of the present invention provides an information receiving apparatus, which is applied to a user equipment side. As shown in FIG. 14, the information receiving apparatus includes a detection module 1410 and an information receiving module 1420.

The detection module 1410 is configured to detect whether a network side triggers a user equipment in a set manner to perform a first operation, where the first operation includes one of: receiving downlink control information (DCI) in a search space, or receiving a first signal on a physical resource.

The information receiving module 1420 is configured to: in response to a detection result that the network side triggers the user equipment in the set manner to perform the first operation, perform the first operation.

Objects, technical solutions and advantages of the present invention will be clearer from a detailed description of the embodiments of the present invention. It is to be noted that if not in collision, the features in this embodiment may be combined with each other.

In an embodiment of the present invention, the detection module 1410 is specifically configured to perform an operation described below.

It is detected whether the network side triggers the user equipment by a data packet to perform the first operation. Specifically, it is detected whether the network side schedules the data packet, and in response to detecting that the network side schedules the data packet, it is determined that the network side triggers the user equipment to perform the first operation.

Alternatively, it is detected whether the network side triggers the user equipment by a number of subframes allocated to the data packet to perform the first operation. Specifically, it is detected whether the number of subframes allocated by the network side to the data packet reaches a set threshold, and in response to detecting that the number of subframes reaches the set threshold, it is determined that the network side triggers the user equipment to perform the first operation.

Alternatively, it is detected whether the network side triggers the user equipment by a format of the DCI to perform the first operation. Specifically, it is detected whether the format of the DCI, which is used for a resource grant and sent by the network side, is a specified format, and in response to detecting that the format of the DCI is the specified format, it is determined that the network side triggers the user equipment to perform the first operation.

Alternatively, it is detected whether the network side triggers the user equipment by signaling in the DCI to perform the first operation. Specifically, it is detected whether the signaling in the DCI, which is used for the resource grant and sent by the network side, instructs the user equipment to perform the first operation, and in response to detecting that the signaling in the DCI instructs the user equipment to perform the first operation, it is determined that the network side triggers the user equipment to perform the first operation.

Alternatively, it is detected whether the network side triggers the user equipment by a transmission mode of the data packet to perform the first operation. Specifically, it is detected whether the transmission mode configured by the network side for the data packet is a specified transmission mode, and in response to detecting that the transmission mode of the data packet is the specified transmission mode, it is determined that the network side triggers the user equipment to perform the first operation.

Alternatively, it is detected whether the network side triggers the user equipment by a second signal to perform the first operation. Specifically, it is detected whether the network side delivers the second signal of a specified sequence on a specified time-frequency resource, and in response to detecting that the network side delivers the second signal of the specified sequence on the specified time-frequency resource, it is determined that the network side triggers the user equipment to perform the first operation.

Alternatively, it is detected whether the network side triggers the user equipment by a type of the data packet to perform the first operation. Alternatively, it is detected whether the data packet scheduled by the network side has a specified type, and in response to detecting that the data packet scheduled by the network side has the specified type, it is determined that the network side triggers the user equipment to perform the first operation.

Alternatively, it is detected whether the network side triggers the user equipment by a subframe length to perform the first operation. Specifically, it is detected whether the network side schedules a short subframe, and in response to detecting that the network side schedules the short subframe, it is determined that the network side triggers the user equipment to perform the first operation.

In an embodiment of the present invention, when the first operation is receiving the DCI in the search space, the DCI received by the information receiving module 1420 in the search space includes at least one of: DCI for the resource grant, DCI for power control, DCI for acknowledgement (ACK) feedback, or DCI for negative acknowledgement (NACK) feedback.

The DCI for the resource grant includes at least one of: DCI for granting a resource to a new data packet or DCI for granting a resource for a retransmission of the data packet.

The DCI for the ACK feedback and/or the NACK feedback includes at least one of: common DCI or user equipment-specific DCI.

The common DCI carries feedback for multiple user equipments, and the user equipment-specific DCI carries feedback for the unique user equipment, where the feedback is the ACK feedback or the NACK feedback.

In an embodiment of the present invention, an available control channel element set for the common DCI is determined in one of manners described below.
(1) The available control channel element set is preset. For example, it is preset that the available control channel element set includes all control channel elements in the search space.
(2) The available control channel element set is determined by the signaling.

At least one available control channel element set exists.

In an embodiment of the present invention, positions of the ACK feedback and/or the NACK feedback in the common DCI are determined in one of manners described below.
(11) The positions of the ACK feedback and/or the NACK feedback in the common DCI are determined by the signaling.
(12) The positions of the ACK feedback and/or the NACK feedback in the common DCI are determined according to a frequency domain resource allocated to the data packet, where the frequency domain resource includes at least one of: a resource block and a narrow band.

A radio network temporal identity (RNTI) for cyclic redundancy check (CRC) scrambling of the common DCI is preset or determined by the signaling.

In an embodiment of the present invention, the search space includes at least one of: a first search space, a second search space or a third search space.

The first search space is a user equipment-specific search space (USS); the second search space is a subset of the USS; and the third search space is a user equipment-specific search space added based on an existing search space or a common search space added based on an existing search space.

In an embodiment of the present invention, the second search space and/or the third search space are located within a transmission period of the data packet.

In an embodiment of the present invention, when the second search space and/or the third search space are located within the transmission period of the data packet, as a preferred implementation manner, time domain positions of the second search space and/or the third search space are located after a K1-th subframe allocated to the data packet and before a K2-th to last subframe allocated to the data packet, where K1 and K2 are integers greater than 1.

In an embodiment of the present invention, the information receiving module determines the time domain position of the third search space in one of manners described below.

The time domain position of the third search space is determined by the signaling.

The time domain position of the third search space is determined by a last one subframe allocated to the data packet.

A candidate time domain position of the third search space is determined by the signaling, and the time domain position of the third search space is determined by the candidate time domain position and the last one subframe allocated to the data packet.

The candidate time domain position of the third search space is determined by the signaling, and the time domain position of the third search space is determined by the candidate time domain position and a subframe allocated to the data packet.

The time domain position of the third search space is determined according to the number of subframes allocated to the data packet.

The time domain position of the third search space is determined according to the number of subframes allocated to the data packet and a number of subframes allocated to the third search space.

A time domain position of the first search space is used as the candidate time domain position of the third search space, and the time domain position of the third search space is determined according to the candidate time domain position and the last one subframe allocated to the data packet (i.e., an ending subframe for sending the data packet).

The time domain position of the first search space is used as the candidate time domain position of the third search space, and the time domain position of the third search space is determined according to the candidate time domain position and the subframe allocated to the data packet.

In an embodiment of the present invention, the information receiving module determines a narrow band of the third search space in one of manners described below.

The narrow band of the third search space is determined by the signaling. As an option, a resource block set occupied by the third search space in the narrow band may be further determined by the signaling.

The narrow band of the third search space is determined according to a narrow band of the first search space.

The narrow band of the third search space corresponds to a frequency domain position of the third search space, and specifically, a narrow band where the third search space is located in frequency domain.

The narrow band of the third search space is determined according to the narrow band of the first search space, including that the narrow band of the third search space is the same as the narrow band of the first search space. In this case, as an option, the resource block set occupied by the third search space in the narrow band is the same as a resource block set occupied by the first search space in the narrow band.

In an embodiment of the present invention, when the third search space conflicts with the first search space, the information receiving module abandons receiving the DCI in the third search space.

In an embodiment of the present invention, for a half-duplex frequency division duplex (HD-FDD) system, the second search space and/or the third search space are located within an uplink gap of the user equipment.

In an embodiment of the present invention, the uplink gap is a first uplink gap or a second uplink gap, where the first uplink gap is used by the user equipment for downlink time-frequency synchronization, and the second uplink gap is an uplink gap added based on an existing uplink gap.

In an embodiment of the present invention, the information receiving module determines a time domain position of the second uplink gap in one of manners described below.

The time domain position of the second uplink gap is determined by the signaling.

The time domain position of the second uplink gap starts from a first subframe after the first uplink gap.

A candidate time domain position of the second uplink gap is determined by the signaling, and the time domain position of the second uplink gap is determined according to the candidate time domain position of the second uplink gap and the subframe allocated to the data packet.

The time domain position of the second uplink gap is determined according to the number of subframes allocated to the data packet.

The time domain position of the second uplink gap is determined according to the number of subframes allocated to the data packet and a number of subframes allocated to the second uplink gap.

In an embodiment of the present invention, when the second uplink gap overlaps the first uplink gap, the information receiving module abandons receiving the DCI in a search space within the second uplink gap or delays the second uplink gap.

In an embodiment of the present invention, when the uplink gap is the first uplink gap, at least one of the following is included:
When the search space includes the third search space, the narrow band of the third search space includes 6 resource blocks in the center of system bandwidth.

A subframe for receiving a synchronization signal and/or a physical broadcast channel is not used for receiving the DCI.

In an embodiment of the present invention, when the first operation is receiving the first signal on the physical resource, the first signal is one of: a first signal for the downlink time-frequency synchronization, a first signal for downlink channel measurement and channel estimation (i.e., the first signal may be regarded as a downlink reference signal), a first signal for the ACK feedback or a first signal for the NACK feedback.

It is to be noted that when the first signal is the first signal for the ACK feedback, the user equipment determines whether the ACK feedback is sent by whether the first signal has been detected on the physical resource. Similarly, when the first signal is the first signal for the NACK feedback, the user equipment determines whether the NACK feedback is sent by whether the first signal has been detected on the physical resource.

In an embodiment of the present invention, when the first operation is receiving the first signal on the physical resource, the physical resource is located within the transmission period of the data packet, that is, a time domain position of the physical resource is located within a time range from a starting moment of a first subframe allocated to the data packet to an ending moment of the last subframe allocated to the data packet. When the first signal is the first signal for the ACK feedback, by the method, the ACK feedback may be received before an uplink data packet is sent on all subframes according to the number of subframes allocated to the uplink data packet, so that the user equipment can stop sending the uplink data packet in advance, thereby reducing unnecessary resource losses and power losses of the user equipment.

In an embodiment of the present invention, the time domain position of the physical resource is located after the K1-th subframe allocated to the data packet and before the K2-th to last subframe allocated to the data packet, where K1 and K2 are integers greater than 1. For example, when the first signal is the first signal for the ACK feedback, when a network side device has not decoded the data packet, the user equipment has no need to monitor the ACK feedback, that is, the method considers a delay for decoding the data packet by the network side device.

In an embodiment of the present invention, the time domain position of the physical resource is determined in manners described below.

In a manner1, the time domain position of the physical resource is determined by the signaling.

In a manner 2, the time domain position of the physical resource is determined by the last one subframe allocated to the data packet (i.e., the ending subframe for sending the data packet).

In a manner 3, a candidate time domain position of the physical resource is determined by the signaling, and the time domain position of the physical resource is determined according to the candidate time domain position and the last one subframe allocated to the data packet (i.e., the ending subframe for sending the data packet).

Determining the candidate time domain position of the physical resource by the signaling includes determining a starting subframe and a size of the candidate time domain position of the physical resource by the signaling.

In a manner 4, the candidate time domain position of the physical resource is determined by the signaling, and the time domain position of the physical resource is determined by the candidate time domain position and the subframe allocated to the data packet.

Determining the candidate time domain position of the physical resource by the signaling includes determining the starting subframe and the size of the candidate time domain position of the physical resource by the signaling.

In a manner 5, the time domain position of the physical resource is determined by the number of subframes allocated to the data packet.

In a manner 6, the time domain position of the physical resource is determined by the number of subframes allocated to the data packet and a number of subframes allocated to the physical resource.

It is to be noted that in the embodiment of the present invention, a size of the time domain position of the physical resource is equivalent to the number of subframes allocated to the physical resource. If not particularly indicated, it may be considered that the size of the time domain position of the physical resource is determined by the signaling.

In an embodiment of the present invention, the physical resource occupies 1 resource block or 6 resource blocks (equivalent to 1 narrow band) in the frequency domain.

In an embodiment of the present invention, a position of the resource block occupied by the physical resource in the frequency domain is determined by the signaling.

In an embodiment of the present invention, when the physical resource conflicts with the user equipment-specific search space, the user equipment abandons receiving the first signal on the physical resource. That is, receiving the DCI in the user equipment-specific search space is a higher priority.

In an embodiment of the present invention, for HD-FDD, the physical resource is located within the uplink gap of the user equipment. That is, the time domain position of the physical resource is located within a time range from a starting moment of a first subframe within the uplink gap to an ending moment of a last subframe within the uplink gap.

The uplink gap is the first uplink gap or the second uplink gap, where the first uplink gap is used by the user equipment for the downlink time-frequency synchronization and exists before the user equipment is triggered to receive the first signal on the physical resource, and the second uplink gap is a newly-added uplink gap (relative to the existing uplink gap before the user equipment is triggered to receive the first signal on the physical resource, for example, the first uplink gap).

The time domain position of the second uplink gap is determined in one of manners described below.

In a manner 1, the time domain position of the second uplink gap is determined by the signaling.

In a manner 2, the time domain position of the second uplink gap starts from the first subframe after the first uplink gap (that is, the second uplink gap immediately follows the first uplink gap). A size of the time domain position of the second uplink gap is determined by the signaling.

In a manner 3, the candidate time domain position of the second uplink gap is determined by the signaling, and the time domain position of the second uplink gap is determined by the candidate time domain position of the second uplink gap and the subframe allocated to the data packet.

In a manner 4, the time domain position of the second uplink gap is determined by the number of subframes allocated to the data packet.

In a manner 5, the time domain position of the second uplink gap is determined by the number of subframes allocated to the data packet and the number of subframes allocated to the second uplink gap.

It is to be noted that in the embodiments of the present invention, the size of the time domain position of the second uplink gap is equivalent to the number of subframes allocated to the second uplink gap. If not particularly indicated, the size of the time domain position of the second uplink gap is determined in one of manners described below.

The size of the time domain position of the second uplink gap is determined by the signaling.

The size of the time domain position of the second uplink gap is determined according to the size of the time domain position of the physical resource. For example, the size of the time domain position of the second uplink gap is equal to the size of the time domain position of the physical resource plus a fixed integer (for example, the fixed integer may be 2).

In an embodiment of the present invention, when the second uplink gap overlaps the first uplink gap, the information receiving module abandons receiving the DCI in the search space within the second uplink gap or delays the second uplink gap. When a manner of delaying the second uplink gap is used, the delayed second uplink gap may start from the first subframe after the first uplink gap.

In an embodiment of the present invention, when the uplink gap is the first uplink gap, at least one of the following is included:
The resource block occupied by the physical resource in the frequency domain is located within a range of the 6 resource blocks in the center of system bandwidth (i.e., the resource block occupied by the physical resource is located within a narrow band for a transmission of the synchronization signal and the physical broadcast channel). The subframe for receiving the synchronization signal and/or the physical broadcast channel is not used for receiving the first signal. The downlink time-frequency synchronization is mainly based on reception of the synchronization signal and the physical broadcast channel. The method helps to minimize influence on the reception of the synchronization signal and the physical broadcast channel while the first signal is received.

When the physical resource occupies one resource block in the frequency domain, a length of a sequence corresponding to the first signal is an integer multiple of 12.

The sequence corresponding to the first signal is one of a PN sequence, a ZC sequence, a cyclic extended sequence of the ZC sequence, an M sequence, a Gold sequence or a product of the M sequence and the Gold sequence.

For example, the PN sequence is generated according to an identity of the user equipment.

For example, the ZC sequence is generated by determining a root index and a cyclic shift index according to the identity of the user equipment, or the ZC sequence is generated by indicating the root index and the cyclic shift index by the signaling.

For example, the ZC sequence is generated by determining the root index and the cyclic shift index by the identity of the user equipment, or the ZC sequence is generated by determining the root index and the cyclic shift index by the signaling; and the cyclic extended sequence of the ZC sequence is determined according to the generated ZC sequence.

For example, the M sequence is determined according to the identity of the user equipment or by the signaling.

For example, the Gold sequence is determined according to the identity of the user equipment or by the signaling.

For example, the M sequence and the Gold sequence are determined according to the identity of the user equipment, or the M sequence and the Gold sequence are determined by the signaling.

In summary, in the embodiments of the present invention, after the network side triggers the user equipment in the set triggering manner, the DCI is received in the search space or a signal is received on the physical resource. This manner for receiving the DCI or the signal improves scheduling flexibility of the DCI and the signal and resource utilization efficiency.

### Embodiment 7

An embodiment of the present invention provides an information sending apparatus, which is applied to a network side device. As shown in FIG. 15, the information sending apparatus includes a triggering module 1510 and an information sending module 1520.

The triggering module 1510 is configured to trigger a user equipment in a set triggering manner to perform a first operation, where the first operation includes one of: receiving downlink control information (DCI) in a search space, or receiving a first signal on a physical resource.

The information sending module 1520 is configured to send the DCI in the search space when the first operation is receiving the DCI in the search space, or send the first signal on the physical resource when the first operation is receiving the first signal on the physical resource.

Objects, technical solutions and advantages of the present invention will be clearer from a detailed description of the embodiments of the present invention. It is to be noted that if not in collision, the features in this embodiment may be combined with each other.

In an embodiment of the present invention, the triggering module 1510 is specifically configured to perform an operation described below.

The user equipment is triggered by a data packet to perform the first operation. Specifically, the user equipment is triggering to perform the first operation by scheduling the data packet.

Alternatively, the user equipment is triggered by a number of subframes allocated to the data packet to perform the first operation. Specifically, the user equipment is triggered by making the number of subframes allocated to the data packet reach a set threshold to perform the first operation.

Alternatively, the user equipment is triggered by a format of the DCI to perform the first operation. Specifically, the user equipment is triggered by setting the format of the DCI for a resource grant as a specified format to perform the first operation.

Alternatively, the user equipment is triggered by signaling in the DCI to perform the first operation. Specifically, the user equipment is instructed by the signaling in the DCI for the resource grant to perform the first operation.

Alternatively, the user equipment is triggered by a transmission mode of the data packet to perform the first operation. Specifically, the user equipment is triggered by setting the transmission mode of the data packet as a specified transmission mode to perform the first operation, where the specified transmission mode includes, but is not limited to, a spatial multiplexing transmission mode or a spatial diversity transmission mode.

Alternatively, the user equipment is triggered by a second signal to perform the first operation. Specifically, the user equipment is triggered by delivering the second signal of a specified sequence on a specified time-frequency resource to perform the first operation.

Alternatively, the user equipment is triggered by a type of the data packet to perform the first operation. Specifically, the user equipment is triggered by scheduling a specified type of data packet to perform the first operation, where the specified type of data packet includes, but is not limited to, a data packet for confirming reception of a radio resource control (RRC) connection release message.

Alternatively, the user equipment is triggered by a subframe length to perform the first operation. Specifically, the user equipment is triggered by scheduling a short subframe to perform the first operation.

In an embodiment of the present invention, when the first operation is receiving the DCI in the search space, the DCI sent by the information sending module 1520 in the search space includes at least one of: DCI for the resource grant, DCI for power control, DCI for acknowledgement (ACK) feedback, or DCI for negative acknowledgement (NACK) feedback.

The DCI for the ACK feedback and/or the NACK feedback includes at least one of: common DCI or user equipment-specific DCI.

In this embodiment, an available control channel element set for the common DCI is determined in one of manners described below.
(1) The available control channel element set is preset.
(2) The available control channel element set is indicated by signaling.

At least one available control channel element set exists.

In this embodiment, positions of the ACK feedback and/or the NACK feedback in the common DCI are determined in one of manners described below.
(1) The positions of the ACK feedback and/or the NACK feedback in the common DCI are indicated by the signaling.
(2) The positions of the ACK feedback and/or the NACK feedback in the common DCI are determined according to a frequency domain resource allocated to the data packet, where the frequency domain resource includes at least one of: a resource block and a narrow band. For details, reference may be made to the description of examples in this part of a first embodiment.

In this embodiment, a radio network temporal identity (RNTI) for cyclic redundancy check (CRC) scrambling of the common DCI is preset or indicated by the signaling.

In an embodiment of the present invention, when the first operation is receiving the DCI in the search space, the search space includes at least one of: a first search space, a second search space or a third search space.

The first search space is a user equipment-specific search space (USS); the second search space is a subset of the USS; and the third search space is a user equipment-specific search space added based on an existing search space or a common search space added based on an existing search space.

In an embodiment of the present invention, the second search space and/or the third search space are located within a transmission period of the data packet.

Specifically, in this embodiment, when the second search space and/or the third search space are located within the transmission period of the data packet, as a preferred implementation manner, time domain positions of the second search space and/or the third search space are located after a K1-th subframe allocated to the data packet and before a K2-th to last subframe allocated to the data packet, where K1 and K2 are integers greater than 1.

In an embodiment of the present invention, the information sending module 1520 determines the time domain position of the third search space in one of manners described below.

The time domain position of the third search space is indicated by the signaling.

The time domain position of the third search space is determined by a last one subframe allocated to the data packet.

A candidate time domain position of the third search space is indicated by the signaling, and the time domain position of the third search space is determined by the candidate time domain position and the last one subframe allocated to the data packet.

The candidate time domain position of the third search space is indicated by the signaling, and the time domain position of the third search space is determined according to the candidate time domain position and a subframe allocated to the data packet.

The time domain position of the third search space is determined according to the number of subframes allocated to the data packet.

The time domain position of the third search space is determined according to the number of subframes allocated to the data packet and a number of subframes allocated to the third search space.

A time domain position of the first search space is used as the candidate time domain position of the third search space, and the time domain position of the third search space is determined according to the candidate time domain position and the last one subframe allocated to the data packet (i.e., an ending subframe for sending the data packet).

The time domain position of the first search space is used as the candidate time domain position of the third search space, and the time domain position of the third search space is determined according to the candidate time domain position and the subframe allocated to the data packet.

In an embodiment of the present invention, the information sending module 1520 determines a narrow band of the third search space in one of manners described below.

The narrow band of the third search space is indicated by the signaling.

The narrow band of the third search space is determined according to a narrow band of the first search space.

The narrow band of the third search space is determined according to the narrow band of the first search space, including that the narrow band of the third search space is the same as the narrow band of the first search space.

In an embodiment of the present invention, when the third search space conflicts with the first search space, the information sending module abandons sending the DCI in the third search space.

In an embodiment of the present invention, for a half-duplex frequency division duplex (HD-FDD) system, the second search space and/or the third search space are located within an uplink gap of the user equipment.

In an embodiment of the present invention, the uplink gap is a first uplink gap or a second uplink gap, where the first uplink gap is used by the user equipment for downlink time-frequency synchronization, and the second uplink gap is a newly-added uplink gap.

In an embodiment of the present invention, the information sending module 1520 determines a time domain position of the second uplink gap in one of manners described below.

The time domain position of the second uplink gap is indicated by the signaling.

The time domain position of the second uplink gap starts from a first subframe after the first uplink gap.

A candidate time domain position of the second uplink gap is indicated by the signaling, and the time domain position of the second uplink gap is determined according to the candidate time domain position of the second uplink gap and the subframe allocated to the data packet.

The time domain position of the second uplink gap is determined according to the number of subframes allocated to the data packet.

The time domain position of the second uplink gap is determined according to the number of subframes allocated to the data packet and a number of subframes allocated to the second uplink gap.

In this embodiment, when the second uplink gap overlaps the first uplink gap, the information sending module 1520 abandons sending the DCI in a search space within the second uplink gap or delays the second uplink gap.

In this embodiment, when the uplink gap is the first uplink gap, at least one of the following is included:
When the search space includes the third search space, the narrow band of the third search space includes 6 resource blocks in the center of system bandwidth.

A subframe for sending a synchronization signal and/or a physical broadcast channel is not used for sending the DCI.

In an embodiment of the present invention, when the first operation is receiving the first signal on the physical resource, the first signal is one of: a first signal for the downlink time-frequency synchronization, a first signal for downlink channel measurement and channel estimation (i.e., the first signal may be regarded as a downlink reference signal), a first signal for the ACK feedback or a first signal for the NACK feedback.

It is to be noted that when the first signal is the first signal for the ACK feedback, the user equipment determines whether the ACK feedback is sent by whether the first signal has been detected on the physical resource. Similarly, when the first signal is the first signal for the NACK feedback, the user equipment determines whether the NACK feedback is sent by whether the first signal has been detected on the physical resource.

Furthermore, in an embodiment of the present invention, when the first operation is receiving the first signal on the physical resource, the physical resource is located within the transmission period of the data packet, that is, a time domain position of the physical resource is located within a time range from a starting moment of a first subframe allocated to the data packet to an ending moment of the last subframe allocated to the data packet. When the first signal is the first signal for the ACK feedback, by the method, the ACK feedback may be received before an uplink data packet is sent on all subframes according to the number of subframes allocated to the uplink data packet, so that the user equipment can stop sending the uplink data packet in advance, thereby reducing unnecessary resource losses and power losses of the user equipment.

In an embodiment of the present invention, the time domain position of the physical resource is located after the K1-th subframe allocated to the data packet and before the K2-th to last subframe allocated to the data packet, where K1 and K2 are integers greater than 1.

In an embodiment of the present invention, the time domain position of the physical resource is determined in manners described below.

In a manner1, the time domain position of the physical resource is indicated by the signaling.

In a manner 2, the time domain position of the physical resource is determined by the last one subframe allocated to the data packet (i.e., the ending subframe for sending the data packet).

In a manner 3, a candidate time domain position of the physical resource is indicated by the signaling, and the time domain position of the physical resource is determined according to the candidate time domain position and the last one subframe allocated to the data packet (i.e., the ending subframe for sending the data packet).

In a manner 4, the candidate time domain position of the physical resource is indicated by the signaling, and the time domain position of the physical resource is determined according to the candidate time domain position and the subframe allocated to the data packet.

In a manner 5, the time domain position of the physical resource is determined according to the number of subframes allocated to the data packet.

In a manner 6, the time domain position of the physical resource is determined according to the number of subframes allocated to the data packet and a number of subframes allocated to the physical resource. For example, the time domain position of the physical resource starts from a (x2*P4+1)-th subframe allocated to the data packet, where x2 is a sequence which is 1, 2, ···, X2-1, where X2 is an integer greater than 1, and P4 is equal to N/X2, where N represents the number of subframes allocated to the data packet. A value of X2 is determined according to the number of subframes allocated to the data packet (i.e., the value of N) and the number of subframes allocated to the physical resource (i.e., a size of the time domain position of the physical resource).

It is to be noted that in the embodiment of the present invention, the size of the time domain position of the physical resource is equivalent to the number of subframes allocated to the physical resource. If not particularly indicated, it may be considered that the size of the time domain position of the physical resource is indicated by the signaling.

In an embodiment of the present invention, the physical resource occupies 1 resource block or 6 resource blocks (equivalent to 1 narrow band) in frequency domain.

In an embodiment of the present invention, a position of the resource block occupied by the physical resource in the frequency domain is indicated by the signaling.

In an embodiment of the present invention, under a condition that the physical resource conflicts with the user equipment-specific search space, the network side device abandons sending the first signal on the physical resource.

In an embodiment of the present invention, for HD-FDD, the physical resource is located within the uplink gap of the user equipment. That is, the time domain position of the physical resource is located within a time range from a starting moment of a first subframe within the uplink gap to an ending moment of a last subframe within the uplink gap.

The uplink gap is the first uplink gap or the second uplink gap, where the first uplink gap is used by the user equipment for the downlink time-frequency synchronization and exists before the user equipment is triggered to receive the first signal on the physical resource, and the second uplink gap is a newly-added uplink gap (relative to the existing uplink gap before the user equipment is triggered to receive the first signal on the physical resource, for example, the first uplink gap).

The time domain position of the second uplink gap is determined in one of manners described below.

In a manner 1, the time domain position of the second uplink gap is indicated by the signaling.

In a manner 2, the time domain position of the second uplink gap starts from the first subframe after the first uplink gap (that is, the second uplink gap immediately follows the first uplink gap). A size of the time domain position of the second uplink gap is indicated by the signaling.

In a manner 3, the candidate time domain position of the second uplink gap is indicated by the signaling, and the time domain position of the second uplink gap is determined according to the candidate time domain position of the second uplink gap and the subframe allocated to the data packet.

In a manner 4, the time domain position of the second uplink gap is determined according to the number of subframes allocated to the data packet.

In a manner 5, the time domain position of the second uplink gap is determined according to the number of subframes allocated to the data packet and the number of subframes allocated to the second uplink gap.

It is to be noted that in the embodiments of the present invention, the size of the time domain position of the second uplink gap is equivalent to the number of subframes allocated to the second uplink gap. If not particularly indicated, the size of the time domain position of the second uplink gap is determined in one of manners described below.

The size of the time domain position of the second uplink gap is indicated by the signaling.

The size of the time domain position of the second uplink gap is determined according to the size of the time domain position of the physical resource. For example, the size of the time domain position of the second uplink gap is equal to the size of the time domain position of the physical resource plus a fixed integer (for example, the fixed integer may be 2). Furthermore, in an embodiment of the present invention, when the second uplink gap overlaps the first uplink gap, the network side device abandons sending the DCI in the search space within the second uplink gap or delays the second uplink gap. When the manner of delaying the second uplink gap is used, the delayed second uplink gap may start from the first subframe after the first uplink gap.

In an embodiment of the present invention, when the uplink gap is the first uplink gap, at least one of the following is included:
The resource block occupied by the physical resource in the frequency domain is located within a range of the 6 resource blocks in the center of system bandwidth (i.e., the resource block occupied by the physical resource is located within a narrow band for a transmission of the synchronization signal and the physical broadcast channel). The subframe for sending the synchronization signal and/or the physical broadcast channel is not used for sending the first signal. The downlink time-frequency synchronization is mainly based on reception of the synchronization signal and the physical broadcast channel. The method helps to minimize influence on the reception of the synchronization signal and the physical broadcast channel while the first signal is received.

When the physical resource occupies one resource block in the frequency domain, a length of a sequence corresponding to the first signal is an integer multiple of 12.

Furthermore, the sequence corresponding to the first signal is one of a PN sequence, a ZC sequence, a cyclic extended sequence of the ZC sequence, an M sequence, a Gold sequence or a product of the M sequence and the Gold sequence.

For example, the PN sequence is generated according to an identity of the user equipment.

For example, the ZC sequence is generated by determining a root index and a cyclic shift index according to the identity of the user equipment, or the ZC sequence is generated by indicating the root index and the cyclic shift index by the signaling.

For example, the ZC sequence is generated by determining the root index and the cyclic shift index according to the identity of the user equipment, or the ZC sequence is generated by indicating the root index and the cyclic shift index by the signaling; and the cyclic extended sequence of the ZC sequence is determined according to the generated ZC sequence.

For example, the M sequence is indicated according to the identity of the user equipment or by the signaling.

For example, the Gold sequence is indicated according to the identity of the user equipment or by the signaling.

For example, the M sequence and the Gold sequence are determined according to the identity of the user equipment, or the M sequence and the Gold sequence are indicated by the signaling.

In summary, before sending the DCI or a signal, the apparatus in the embodiments of the present invention triggers the user equipment in the set manner to receive the DCI in the search space or receive the signal on the physical resource, and sends the DCI in the search space or sends the signal on the physical resource after the user equipment is triggered, improving scheduling flexibility of the DCI and the signal and resource utilization efficiency.

The various embodiments in the description are described in a progressive manner. The same or similar parts in the various embodiments are referred to each other. Each embodiment focuses on differences from the other embodiments. Especially for the apparatus embodiments, since they are substantially similar to the method embodiments, the description of the apparatus embodiments is relatively simple, and for a related part, reference may be made to the description of the related part in the method embodiments.

It will be understood by those skilled in the art that all or part of the steps in the methods described above may be implemented by related hardware instructed by programs, and these programs may be stored in a computer-readable storage medium such as a read-only memory (ROM), a magnetic disk or an optical disk. Optionally, all or part of the steps in the embodiments described above may also be implemented by using one or more integrated circuits. Accordingly, the various modules/units in the embodiments described above may be implemented by hardware or in the form of software function modules. The present invention is not limited to any specific combination of hardware and software.

It should be understood by those skilled in the art that the embodiments of the present invention may be provided as methods, systems or computer program products. Therefore, the present invention may be embodied in the form of a hardware embodiment, a software embodiment, or a combination of hardware and software embodiments. In addition, the present invention may be embodied in the form of a computer program product implemented on one or more computer-usable storage media (including, but not limited to, a disk memory, an optical memory and the like) which include computer-usable program codes.

The present invention is described with reference to flowcharts and/or block diagrams of the methods, devices (systems) and computer program products according to the embodiments of the present invention. It should be understood that computer program instructions may implement each flow and/or block in the flowcharts and/or the block diagrams and a combination of flows and/or blocks in the flowcharts and/or the block diagrams. These computer program instructions may be provided for a general-purpose computer, a special-purpose computer, an embedded processor or a processor of another programmable data processing device to produce a machine so that instructions executed by the computer or the processor of another programmable data processing device produce a means for implementing functions designated in one or more flows in the flowcharts and/or one or more blocks in the block diagrams.

These computer program instructions may also be stored in a computer-readable memory which can cause the computer or another programmable data processing device to operate in a particular manner so that the instructions stored in the computer-readable memory produce a manufactured product including an instructing means. The instructing means implements the functions designated in the one or more flows in the flowcharts and/or the one or more blocks in the block diagrams.

These computer program instructions may also be loaded onto the computer or another programmable data processing device so that a series of operation steps are performed on the computer or another programmable device to produce processing implemented by the computer. Therefore, instructions executed on the computer or another programmable device provide steps for implementing the functions designated in the one or more flows in the flowcharts and/or the one or more blocks in the block diagrams.

The invention is defined by the appended claims.

### INDUSTRIAL APPLICABILITY

In the embodiments of the present invention, before sending the DCI or the signal, the network side triggers the user equipment in the set manner to receive the DCI in the search space or receive the signal on the physical resource, and sends the DCI in the search space or sends the signal on the physical resource after the user equipment is triggered. This manner for receiving the DCI or the signal improves the scheduling flexibility of the DCI and the signal and the resource utilization efficiency.

## Claims

1. An information receiving method, the method performed by a user equipment, the method comprising:
detecting (S 101) whether a network side triggers the user equipment to perform a first operation;
and
in response to a detection result that the network side triggers the user equipment to perform the first operation, performing (S 102) the first operation, wherein the first operation comprises:
receiving downlink control information, DCI, in a search space;
in a case where the first operation is receiving the DCI in the search space, the search space comprises a user equipment-specific search space added based on an existing search space or a common search space added based on an existing search space, wherein the existing search space refers to a search space before the user equipment is triggered to receive the DCI;
for a half-duplex frequency division duplex, HD-FDD, system, the search space is located within an uplink gap of the user equipment; and
the uplink gap is a second uplink gap, is in a period when a data packet is sent and is used for receiving the DCI, wherein the second uplink gap is an uplink gap added based on an existing uplink gap, wherein the existing uplink gap is a first uplink gap, wherein the first uplink gap is an uplink gap used for downlink time-frequency synchronization by the user equipment.

2. The method of claim 1, wherein detecting (S101) whether the network side triggers the user equipment to perform the first operation comprises one of:
in response to detecting that the network side schedules the data packet, performing, by the user equipment, the first operation;
in response to detecting that a number of subframes allocated to the data packet reaches a set threshold, performing, by the user equipment, the first operation;
detecting whether the network side triggers the user equipment by a format of the DCI to perform the first operation;
detecting whether the network side triggers the user equipment by signaling in the DCI to perform the first operation by signaling in the DCI;
in response to detecting that a transmission mode of the data packet is a specified transmission mode, performing, by the user equipment, the first operation, wherein the specified transmission mode comprises spatial multiplexing or spatial diversity;
in response to detecting that the network side delivers a second signal with a specified sequence on the specified time-frequency resource, performing, by the user equipment, the first operation;
in response to detecting that a type of the data packet transmitted by the network side is a data packet for confirming reception of a radio resource control, RRC, connection release message, performing, by the user equipment, the first operation; or
in response to detecting that the network side schedules transmission of the data packet on a subframe having a preset subframe length, performing, by the user equipment, the first operation, wherein the subframe having the preset subframe length comprises a normal subframe or a short subframe.

3. The method of claim 1, wherein under a condition that the first operation is receiving the DCI in the search space, the DCI comprises at least one of:
DCI for a resource grant;
DCI for power control;
DCI for acknowledgement, ACK, feedback; or
DCI for negative acknowledgement, NACK, feedback.

4. The method of claim 1, wherein the search space is located within a transmission period of the data packet; and
wherein a time domain position of the search space is located after a K1-th subframe allocated to the data packet and before a K2-th to last subframe allocated to the data packet, wherein K1 and K2 are integers greater than 1.

5. The method of claim 1, wherein a time domain position of the search space is determined in one of the following manners:
determining the time domain position of the search space by signaling;
determining the time domain position of the search space according to a last one subframe allocated to the data packet;
determining a candidate time domain position of the search space by signaling, and determining the time domain position of the search space according to the candidate time domain position and a last one subframe allocated to the data packet;
determining a candidate time domain position of the search space by signaling, and determining the time domain position of the search space according to the candidate time domain position and a subframe allocated to the data packet;
determining the time domain position of the search space according to a number of subframes allocated to the data packet; or
determining the time domain position of the search space by a number of subframes allocated to the data packet and a number of subframes allocated to the search space.

6. The method of claim 1, wherein a narrow band of the search space is determined in one of the following manners:
determining the narrow band of the search space by signaling; or
determining the narrow band of the search space according to a narrow band of a user equipment-specific search space.

7. The method of claim 1, wherein a time domain position of the second uplink gap is determined in one of the following manners:
determining the time domain position of the second uplink gap by signaling;
starting the time domain position of the second uplink gap from a first subframe after the first uplink gap;
determining a candidate time domain position of the second uplink gap by signaling, and determining the time domain position of the second uplink gap according to the candidate time domain position of the second uplink gap and a subframe allocated to the data packet;
determining the time domain position of the second uplink gap according to a number of subframes allocated to the data packet; or
determining the time domain position of the second uplink gap by a number of subframes allocated to the data packet and a number of subframes allocated to the second uplink gap.

8. An information sending method, the method performed by an information sending device, the method comprising:
triggering (S1101) a user equipment to perform a first operation, wherein the first operation comprises receiving downlink control information, DCI, in a search space; and
sending (S 1102) the DCI in the search space under a condition that the first operation is receiving the DCI in the search space;
in a case where the first operation is receiving the DCI in the search space, the search space comprises a user equipment-specific search space added based on an existing search space or a common search space added based on an existing search space, wherein the existing search space refers to a search space before the user equipment is triggered to receive the DCI;
for a half-duplex frequency division duplex, HD-FDD, system, the search space is located within an uplink gap of the user equipment; and
the uplink gap is a second uplink gap, is in a period when a data packet is sent and is used for receiving the DCI, wherein the second uplink gap is an uplink gap added based on an existing uplink gap, wherein the existing uplink gap is a first uplink gap, wherein the first uplink gap is an uplink gap used for downlink time-frequency synchronization by the user equipment.

9. The method of claim 8, wherein triggering the user equipment to perform the first operation comprises one of:
triggering the user equipment by the data packet to perform the first operation;
triggering the user equipment by a number of subframes allocated to the data packet to perform the first operation;
triggering the user equipment by a format of the DCI to perform the first operation;
triggering the user equipment by signaling in the DCI to perform the first operation;
triggering the user equipment by a transmission mode of the data packet to perform the first operation;
triggering the user equipment by a second signal to perform the first operation;
triggering the user equipment by a type of the data packet to perform the first operation; or
triggering the user equipment by a subframe length to perform the first operation;
wherein
triggering the user equipment by the data packet to perform the first operation comprises:
triggering the user equipment by scheduling the data packet to perform the first operation;
triggering the user equipment by the number of subframes allocated to the data packet to perform the first operation comprises: triggering the user equipment by making the number of subframes allocated to the data packet reach a set threshold to perform the first operation;
triggering the user equipment by the format of the DCI to perform the first operation comprises:
triggering the user equipment by setting the format of the DCI for a resource grant as a specified format to perform the first operation;
triggering the user equipment by the signaling in the DCI to perform the first operation comprises: instructing the user equipment by the signaling in the DCI for the resource grant to perform the first operation;
triggering the user equipment by the transmission mode of the data packet to perform the first operation comprises: triggering the user equipment by setting the transmission mode of the data packet as a specified transmission mode to perform the first operation, wherein the specified transmission mode comprises spatial multiplexing or spatial diversity;
triggering the user equipment by the second signal to perform the first operation comprises:
triggering the user equipment by delivering the second signal with a specified sequence on a specified time-frequency resource to perform the first operation;
triggering the user equipment by the type of the data packet to perform the first operation comprises: triggering the user equipment by scheduling a specified type of data packet to perform the first operation, wherein a specified type of data packet is a data packet for confirming reception of a radio resource control, RRC, connection release message; and
triggering the user equipment by the subframe length to perform the first operation comprises:
triggering the user equipment by scheduling transmission of the data packet on a subframe having a preset subframe length to perform the first operation, wherein the subframe having the preset subframe length comprises a normal subframe or a short subframe; and
wherein under a condition that the first operation is receiving the DCI in the search space, the DCI comprises at least one of:
DCI for a resource grant;
DCI for power control;
DCI for acknowledgement, ACK, feedback; or
DCI for negative acknowledgement, NACK, feedback.

10. The method of claim 8, wherein the search space is located within a transmission period of the data packet;
wherein a time domain position of the search space is located after a K1-th subframe allocated to the data packet and before a K2-th to last subframe allocated to the data packet, wherein K1 and K2 are integers greater than 1.

11. The method of claim 8, wherein a time domain position of the search space is determined in one of the following manners:
indicating the time domain position of the search space by signaling;
determining the time domain position of the search space by a last one subframe allocated to the data packet;
indicating a candidate time domain position of the search space by signaling, and determining the domain position of the search space according to the candidate time domain position and a last one subframe allocated to the data packet;
indicating a candidate time domain position of the search space by signaling, and determining
the time domain position of the search space according to the candidate time domain position and a subframe allocated to the data packet;
determining the time domain position of the search space according to a number of subframes allocated to the data packet; or
determining the time domain position of the search space according to a number of subframes allocated to the data packet and a number of subframes allocated to the search space.

12. The method of claim 8, wherein a narrow band of the search space is determined in one of the following manners:
indicating the narrow band of the search space by signaling; or
determining the narrow band of the search space by a narrow band of a user equipment-specific search space.

13. The method of claim 8, wherein a time domain position of the second uplink gap is determined in one of the following manners:
indicating the time domain position of the second uplink gap by signaling;
starting the time domain position of the second uplink gap from a first subframe after the first uplink gap;
indicating a candidate time domain position of the second uplink gap by the signaling, and determining the time domain position of the second uplink gap according to the candidate time domain position of the second uplink gap and a subframe allocated to the data packet;
determining the time domain position of the second uplink gap according to a number of subframes allocated to the data packet; or
determining the time domain position of the second uplink gap according to a number of subframes allocated to the data packet and a number of subframes allocated to the second uplink gap.

14. A user equipment, comprising: a first processor (1210), a first memory (1220) and a communication bus (1230), wherein the communication bus (1230) is configured to achieve a connection communication between the first processor (1210) and the first memory (1220); and wherein the first processor (1210) is configured to execute information receiving programs stored in the first memory (1220) to perform the steps of the method of any one of claims 1 to 7.

15. An information sending device, comprising: a second processor (1310), a second memory (1320) and a communication bus (1330), wherein the communication bus (1330) is configured to achieve a connection communication between the second processor (1310) and the second memory (1320); and
wherein the second processor (1310) is configured to execute information sending programs stored in the second memory (1320) to perform the steps of the method of any one of claims 8 to 13.

## Patentansprüche

1. Informationsempfangsverfahren, wobei das Verfahren von einem Benutzergerät durchgeführt wird, wobei das Verfahren Folgendes umfasst:
Erkennen (S101), ob eine Netzwerkseite das Benutzergerät dazu auslöst, eine erste Operation durchzuführen;
und
als Reaktion auf ein Erkennungsergebnis, dass die Netzwerkseite das Benutzergerät dazu auslöst, die erste Operation durchzuführen, Durchführen (S102) der ersten Operation, wobei die erste Operation Folgendes umfasst: Empfangen von Downlink-Steuerinformationen, DCI, in einem Suchraum;
in einem Fall, in dem die erste Operation die DCI in dem Suchraum empfängt, umfasst der Suchraum einen benutzergerätspezifischen Suchraum, der auf Grundlage eines vorhandenen Suchraums hinzugefügt wurde, oder einen gemeinsamen Suchraum, der auf Grundlage eines vorhandenen Suchraums hinzugefügt wurde, wobei sich der vorhandene Suchraum auf einen Suchraum bezieht, bevor das Benutzergerät dazu ausgelöst wird, die DCI zu empfangen;
für ein Halbduplex-Frequenzteilungsduplex-, HD-FDD-, System befindet sich Suchraum innerhalb einer Uplink-Lücke des Benutzergeräts; und
die Uplink-Lücke ist eine zweite Uplink-Lücke, sich in einem Zeitraum befindet, wenn ein Datenpaket gesendet wird, und zum Empfangen der DCI verwendet wird, wobei die zweite Uplink-Lücke eine Uplink-Lücke ist, die auf Grundlage einer vorhandenen Uplink-Lücke hinzugefügt wird, wobei die vorhandene Uplink-Lücke eine erste Uplink-Lücke ist, wobei die erste Uplink-Lücke eine Uplink-Lücke ist, die zur Downlink-Zeit-Frequenz-Synchronisation durch das Benutzergerät verwendet wird.

2. Verfahren nach Anspruch 1, wobei das Erkennen (S101), ob die Netzwerkseite das Benutzergerät dazu auslöst, die erste Operation durchzuführen, eines von Folgendem umfasst:
als Reaktion auf das Erkennen, dass die Netzwerkseite das Datenpaket plant, Durchführen der ersten Operation durch das Benutzergerät;
als Reaktion auf das Erkennen, dass eine Anzahl von Subframes, die dem Datenpaket zugewiesen sind, einen eingestellten Schwellenwert erreicht, Durchführen der ersten Operation durch das Benutzergerät;
Erkennen, ob die Netzwerkseite das Benutzergerät durch ein Format der DCI dazu auslöst, die erste Operation durchzuführen;
Erkennen, ob die Netzwerkseite das Benutzergerät durch Signalisieren in der DCI dazu auslöst, die erste Operation durch Signalisieren in der DCI durchzuführen;
als Reaktion auf das Erkennen, dass ein Sendemodus des Datenpakets ein spezifizierter Sendemodus ist, Durchführen der ersten Operation durch das Benutzergerät, wobei der spezifizierte Sendemodus räumliches Multiplexen oder räumliche Vielfalt umfasst;
als Reaktion auf das Erkennen, dass die Netzwerkseite ein zweites Signal mit einer spezifizierten Sequenz auf der spezifizierten Zeit-Frequenz-Ressource liefert, Durchführen der ersten Operation durch das Benutzergerät;
als Reaktion auf das Erkennen, dass ein Typ des von der Netzwerkseite gesendeten Datenpakets ein Datenpaket zum Bestätigen des Empfangs einer Funkressourcensteuerungs-, RRC-, Verbindungsaufhebungsnachricht ist, Durchführen der ersten Operation durch das Benutzergerät; oder
als Reaktion auf das Erkennen, dass die Netzwerkseite die Sendung des Datenpakets auf einem Subframe mit einer voreingestellten Subframe-Länge plant, Durchführen der ersten Operation durch das Benutzergerät, wobei der Subframe mit der voreingestellten Subframe-Länge einen normalen Subframe oder einen kurzen Subframe umfasst.

3. Verfahren nach Anspruch 1, wobei unter einer Bedingung, dass die erste Operation die DCI in dem Suchraum empfängt, die DCI mindestens eines von Folgendem umfasst:
DCI für eine Ressourcengewährung;
DCI für die Leistungssteuerung;
DCI für Quittierungs-, ACK-, Feedback; oder
DCI für negative Quittungs-, NACK-, Rückmeldung.

4. Verfahren nach Anspruch 1, wobei sich der Suchraum innerhalb eines Sendungszeitraums des Datenpakets befindet; und
wobei eine Zeitdomänenposition des Suchraums nach einem K1-ten Subframe, der dem Datenpaket zugewiesen ist, und vor einem K2-ten bis letzten Subframe, der dem Datenpaket zugewiesen ist, angeordnet ist, wobei K1 und K2 ganze Zahlen größer als 1 sind.

5. Verfahren nach Anspruch 1, wobei eine Zeitdomänenposition des Suchraums auf eine der folgenden Weisen bestimmt wird:
Bestimmen der Zeitdomänenposition des Suchraums durch Signalisieren;
Bestimmen der Zeitdomänenposition des Suchraums gemäß einem letzten Subframe, der dem Datenpaket zugewiesen ist;
Bestimmen einer Kandidaten-Zeitdomänenposition des Suchraums durch Signalisieren und Bestimmen der Zeitdomänenposition des Suchraums gemäß der Kandidaten-Zeitdomänenposition und einem letzten Subframe, der dem Datenpaket zugewiesen ist;
Bestimmen einer Kandidaten-Zeitdomänenposition des Suchraums durch Signalisieren und Bestimmen der Zeitdomänenposition des Suchraums gemäß der Kandidaten-Zeitdomänenposition und einem Subframe, der dem Datenpaket zugewiesen ist;
Bestimmen der Zeitdomänenposition des Suchraums gemäß einer Anzahl von Subframes, die dem Datenpaket zugewiesen sind; oder
Bestimmen der Zeitdomänenposition des Suchraums durch eine Anzahl von Subframes, die dem Datenpaket zugewiesen sind, und eine Anzahl von Subframes, die dem Suchraum zugewiesen sind.

6. Verfahren nach Anspruch 1, wobei ein schmales Band des Suchraums auf eine der folgenden Weisen bestimmt wird:
Bestimmen des schmalen Bandes des Suchraums durch Signalisieren; oder
Bestimmen des schmalen Bandes des Suchraums gemäß einem schmalen Band eines benutzergerätspezifischen Suchraums.

7. Verfahren nach Anspruch 1, wobei eine Zeitdomänenposition der zweiten Uplink-Lücke auf eine der folgenden Weisen bestimmt wird:
Bestimmen der Zeitdomänenposition der zweiten Uplink-Lücke durch Signalisieren;
Starten der Zeitdomänenposition der zweiten Uplink-Lücke von einem ersten Subframe nach der ersten Uplink-Lücke;
Bestimmen einer Kandidaten-Zeitdomänenposition der zweiten Uplink-Lücke durch Signalisieren, und
Bestimmen der Zeitdomänenposition der zweiten Uplink-Lücke gemäß der Kandidaten-Zeitdomänenposition der zweiten Uplink-Lücke und einem Subframe, der dem Datenpaket zugewiesen ist;
Bestimmen der Zeitdomänenposition der zweiten Uplink-Lücke gemäß einer Anzahl von Subframes, die dem Datenpaket zugewiesen sind; oder
Bestimmen der Zeitdomänenposition der zweiten Uplink-Lücke durch eine Anzahl von Subframes, die dem Datenpaket zugewiesen sind, und eine Anzahl von Subframes, die der zweiten Uplink-Lücke zugewiesen sind.

8. Informationssendeverfahren, wobei das Verfahren von einer Informationssendevorrichtung durchgeführt wird, wobei das Verfahren Folgendes umfasst:
Auslösen (S1101) eines Benutzergeräts, um eine erste Operation durchzuführen, wobei die erste Operation das Empfangen von Downlink-Steuerinformationen, DCI, in einem Suchraum umfasst; und
Senden (S1102) der DCI in dem Suchraum unter einer Bedingung, dass die erste Operation die DCI in dem Suchraum empfängt;
in einem Fall, in dem die erste Operation die DCI in dem Suchraum empfängt, umfasst der Suchraum einen benutzergerätspezifischen Suchraum, der auf Grundlage eines vorhandenen Suchraums hinzugefügt wurde, oder einen gemeinsamen Suchraum, der auf Grundlage eines vorhandenen Suchraums hinzugefügt wurde, wobei sich der vorhandene Suchraum auf einen Suchraum bezieht, bevor das Benutzergerät dazu ausgelöst wird, die DCI zu empfangen;
für ein Halbduplex-Frequenzteilungsduplex-, HD-FDD-, System befindet sich Suchraum innerhalb einer Uplink-Lücke des Benutzergeräts; und
die Uplink-Lücke ist eine zweite Uplink-Lücke, sich in einem Zeitraum befindet, wenn ein Datenpaket gesendet wird, und zum Empfangen der DCI verwendet wird, wobei die zweite Uplink-Lücke eine Uplink-Lücke ist, die auf Grundlage einer vorhandenen Uplink-Lücke hinzugefügt wird, wobei die vorhandene Uplink-Lücke eine erste Uplink-Lücke ist, wobei die erste Uplink-Lücke eine Uplink-Lücke ist, die zur Downlink-Zeit-Frequenz-Synchronisation durch das Benutzergerät verwendet wird.

9. Verfahren nach Anspruch 8, wobei das Auslösen des Benutzergeräts zum Durchführen der ersten Operation eines von Folgendem umfasst:
Auslösen des Benutzergeräts durch das Datenpaket, um die erste Operation durchzuführen;
Auslösen des Benutzergeräts durch eine Anzahl von Subframes, die dem Datenpaket zugewiesen sind, um die erste Operation durchzuführen;
Auslösen des Benutzergeräts durch ein Format der DCI, um die erste Operation durchzuführen;
Auslösen des Benutzergeräts durch Signalisieren in der DCI, um die erste Operation durchzuführen;
Auslösen des Benutzergeräts durch einen Sendemodus des Datenpakets, um die erste Operation durchzuführen;
Auslösen des Benutzergeräts durch ein zweites Signal, um die erste Operation durchzuführen;
Auslösen des Benutzergeräts durch einen Typ des Datenpakets, um die erste Operation durchzuführen; oder
Auslösen des Benutzergeräts durch eine Subframe-Länge, um die erste Operation durchzuführen;
wobei
das Auslösen des Benutzergeräts durch das Datenpaket, um die erste Operation durchzuführen, umfasst:
Auslösen des Benutzergeräts durch Planen des Datenpakets, um die erste Operation durchzuführen;
Auslösen des Benutzergeräts durch die Anzahl von Subframes, die dem Datenpaket zugewiesen sind, um die erste Operation durchzuführen, umfasst: Auslösen des Benutzergeräts, indem die Anzahl von Subframes, die dem Datenpaket zugewiesen sind, einen eingestellten Schwellenwert erreicht, um die erste Operation durchzuführen;
Das Auslösen des Benutzergeräts durch das Format der DCI, um die erste Operation durchzuführen, umfasst:
Auslösen des Benutzergeräts durch Einstellen des Formats der DCI für eine Ressourcengewährung als ein spezifiziertes Format, um die erste Operation durchzuführen;
das Auslösen des Benutzergeräts durch die Signalisierung in der DCI, um die erste Operation durchzuführen, umfasst: Anweisen des Benutzergeräts durch die Signalisierung in der DCI für die Ressourcengewährung, die erste Operation durchzuführen;
das Auslösen des Benutzergeräts durch den Sendemodus des Datenpakets, um die erste Operation durchzuführen, umfasst: Auslösen des Benutzergeräts durch Einstellen des Sendemodus des Datenpakets als einen spezifizierten Sendemodus, um die erste Operation durchzuführen, wobei der spezifizierte Sendemodus räumliches Multiplexen oder räumliche Vielfalt umfasst;
das Auslösen des Benutzergeräts durch das zweite Signal, um die erste Operation durchzuführen, umfasst:
Auslösen des Benutzergeräts durch Liefern des zweiten Signals mit einer spezifizierten Sequenz auf einer spezifizierten Zeit-Frequenz-Ressource, um die erste Operation durchzuführen;
das Auslösen des Benutzergeräts durch den Typ des Datenpakets, um die erste Operation durchzuführen, umfasst: Auslösen des Benutzergeräts durch Planen eines spezifizierten Typs von Datenpaket, um die erste Operation durchzuführen, wobei ein spezifizierter Typ von Datenpaket ein Datenpaket zum Bestätigen des Empfangs einer Funkressourcensteuerungs-, RRC-, Verbindungsaufhebungsnachricht ist; und
das Auslösen des Benutzergeräts durch die Subframe-Länge, um die erste Operation durchzuführen, umfasst:
Auslösen des Benutzergeräts durch Planen der Sendung des Datenpakets auf einem Subframe mit einer voreingestellten Subframe-Länge, um die erste Operation durchzuführen, wobei der Subframe mit der voreingestellten Subframe-Länge einen normalen Subframs oder einen kurzen Subframe umfasst; und
wobei unter einer Bedingung, dass die erste Operation die DCI in dem Suchraum empfängt, die DCI mindestens eines von Folgendem umfasst:
DCI für eine Ressourcengewährung;
DCI für die Leistungssteuerung;
DCI für Quittierungs-, ACK-, Feedback; oder
DCI für negative Quittungs-, NACK-, Rückmeldung.

10. Verfahren nach Anspruch 8, wobei sich der Suchraum innerhalb eines Sendungszeitraums des Datenpakets befindet;
wobei eine Zeitdomänenposition des Suchraums nach einem K1-ten Subframe, der dem Datenpaket zugewiesen ist, und vor einem K2-ten bis letzten Subframe, der dem Datenpaket zugewiesen ist, angeordnet ist, wobei K1 und K2 ganze Zahlen größer als 1 sind.

11. Verfahren nach Anspruch 8, wobei eine Zeitdomänenposition des Suchraums auf eine der folgenden Weisen bestimmt wird:
Angeben der Zeitdomänenposition des Suchraums durch Signalisieren;
Bestimmen der Zeitdomänenposition des Suchraums durch einen letzten Subframe, der dem Datenpaket zugewiesen ist;
Angeben einer Kandidaten-Zeitdomänenposition des Suchraums durch Signalisieren und Bestimmen der Zeitdomänenposition des Suchraums gemäß der Kandidaten-Zeitdomänenposition und einem letzten Subframe, der dem Datenpaket zugewiesen ist;
Angeben einer Kandidaten-Zeitdomänenposition des Suchraums durch Signalisieren und Bestimmen der Zeitdomänenposition des Suchraums gemäß der Kandidaten-Zeitdomänenposition und einem Subframe, der dem Datenpaket zugewiesen ist;
Bestimmen der Zeitdomänenposition des Suchraums gemäß einer Anzahl von Subframes, die dem Datenpaket zugewiesen sind; oder
Bestimmen der Zeitdomänenposition des Suchraums gemäß einer Anzahl von Subframes, die dem Datenpaket zugewiesen sind, und eine Anzahl von Subframes, die dem Suchraum zugewiesen sind.

12. Verfahren nach Anspruch 8, wobei ein schmales Band des Suchraums auf eine der folgenden Weisen bestimmt wird:
Angeben des schmalen Bandes des Suchraums durch Signalisieren; oder
Bestimmen des schmalen Bandes des Suchraums durch ein schmales Band eines benutzergerätspezifischen Suchraums.

13. Verfahren nach Anspruch 8, wobei eine Zeitdomänenposition der zweiten Uplink-Lücke auf eine der folgenden Weisen bestimmt wird:
Angeben der Zeitdomänenposition der zweiten Uplink-Lücke durch Signalisieren;
Starten der Zeitdomänenposition der zweiten Uplink-Lücke von einem ersten Subframe nach der ersten Uplink-Lücke;
Angeben einer Kandidaten-Zeitdomänenposition der zweiten Uplink-Lücke durch die Signalisierung und Bestimmen der Zeitdomänenposition der zweiten Uplink-Lücke gemäß der Kandidaten-Zeitdomänenposition der zweiten Uplink-Lücke und einem Subframe, der dem Datenpaket zugewiesen ist;
Bestimmen der Zeitdomänenposition der zweiten Uplink-Lücke gemäß einer Anzahl von Subframes, die dem Datenpaket zugewiesen sind; oder
Bestimmen der Zeitdomänenposition der zweiten Uplink-Lücke gemäß einer Anzahl von Subframes, die dem Datenpaket zugewiesen sind, und eine Anzahl von Subframes, die der zweiten Uplink-Lücke zugewiesen sind.

14. Benutzergerät, umfassend: einen ersten Prozessor (1210), einen ersten Speicher (1220) und einen Kommunikationsbus (1230), wobei der Kommunikationsbus (1230) konfiguriert ist, um eine Verbindungskommunikation zwischen dem ersten Prozessor (1210) und dem ersten Speicher (1220) zu erreichen; und
wobei der erste Prozessor (1210) dazu konfiguriert ist, in dem ersten Speicher (1220) gespeicherte Informationsempfangsprogramme auszuführen, um die Schritte des Verfahrens nach einem der Ansprüche 1 bis 7 durchzuführen.

15. Informationssendevorrichtung, umfassend: einen zweiten Prozessor (1310), einen zweiten Speicher (1320) und einen Kommunikationsbus (1330), wobei der Kommunikationsbus (1330) konfiguriert ist, um eine Verbindungskommunikation zwischen dem zweiten Prozessor (1310) und dem zweiten Speicher (1320) zu erreichen; und
wobei der zweite Prozessor (1310) konfiguriert ist, um Informationssendeprogramme auszuführen, die in dem zweiten Speicher (1320) gespeichert sind, um die Schritte des Verfahrens nach einem der Ansprüche 8 bis 13 durchzuführen.

## Revendications

1. Procédé de réception d'informations, le procédé étant réalisé par un équipement utilisateur, le procédé comprenant:
la détection (S101) de si un côté réseau déclenche la réalisation d'une première opération par l'équipement utilisateur;
et
en réponse à un résultat de détection selon lequel le côté réseau déclenche la réalisation de la première opération par l'équipement utilisateur, la réalisation (S102) de la première opération, la première opération comprenant: la réception d'informations de commande de liaison descendante, DCI, dans un espace de recherche;
dans un cas où la première opération est de recevoir les DCI dans l'espace de recherche, l'espace de recherche comprend un espace de recherche spécifique à l'équipement utilisateur ajouté sur la base d'un espace de recherche existant ou d'un espace de recherche commun ajouté sur la base d'un espace de recherche existant, l'espace de recherche existant faisant référence à un espace de recherche avant le déclenchement de l'équipement utilisateur pour recevoir les DCI;
pour un système semi-duplex à répartition en fréquence (HD-FDD), l'espace de recherche est est situé à l'intérieur d'un espace de liaison montante de l'équipement utilisateur; et
l'intervalle de liaison montante est un deuxième intervalle de liaison montante, est dans une période où un paquet de données est envoyé et est utilisé pour recevoir les DCI, le deuxième intervalle de liaison montante étant un intervalle de liaison montante ajouté sur la base d'un intervalle de liaison montante existant, l'intervalle de liaison montante existant étant un premier intervalle de liaison montante, le premier intervalle de liaison montante étant un intervalle de liaison montante utilisé pour une synchronisation temps-fréquence de liaison descendante par l'équipement utilisateur.

2. Procédé selon la revendication 1, dans lequel la détection (S101) du fait que le côté réseau déclenche l'équipement utilisateur pour réaliser la première opération comprend l'un des éléments suivants:
en réponse à la détection du fait que le côté réseau ordonnance le paquet de données, la réalisation de la première opération par l'équipement utilisateur;
en réponse à la détection du fait qu'un nombre de sous-trames allouées au paquet de données atteint un seuil défini, la réalisation, par l'équipement utilisateur, de la première opération;
la détection de si le côté réseau déclenche l'équipement utilisateur par un format des DCI pour réaliser la première opération;
la détection de si le côté réseau déclenche l'équipement utilisateur en signalant dans les DCI de réaliser la première opération en signalant dans les DCI;
en réponse à la détection du fait qu'un mode de transmission du paquet de données est un mode de transmission spécifié, la réalisation, par l'équipement utilisateur, de la première opération, le mode de transmission spécifié comprenant un multiplexage spatial ou une diversité spatiale;
en réponse à la détection du fait que le côté réseau délivre un deuxième signal avec une séquence spécifiée sur la ressource temps-fréquence spécifiée, la réalisation, par l'équipement utilisateur, de la première opération;
en réponse à la détection du fait qu'un type du paquet de données transmis par le côté réseau est un paquet de données destiné à confirmer la réception d'un message de libération de connexion de commande de ressource radio (RRC), la réalisation, par l'équipement utilisateur, de la première opération; ou
en réponse à la détection du fait que le côté réseau ordonnance la transmission du paquet de données sur une sous-trame ayant une longueur de sous-trame prédéfinie, la réalisation, par l'équipement utilisateur, de la première opération, la sous-trame ayant la longueur de sous-trame prédéfinie comprenant une sous-trame normale ou une sous-trame courte.

3. Procédé selon la revendication 1, dans lequel à condition que la première opération soit de recevoir les DCI dans l'espace de recherche, les DCI comprennent au moins l'un des éléments suivants:
des DCI pour un octroi de ressource;
des DCI pour une commande de puissance;
des DCI un pour un retour d'information d'accusé de réception, ACK; ou
des DCI pour un retour d'information d'accusé de réception, ACK négatif.

4. Procédé selon la revendication 1, dans lequel l'espace de recherche est situé à l'intérieur d'une période de transmission du paquet de données; et
dans lequel une position de domaine temporel de l'espace de recherche est située après une K1e sous-trame allouée au paquet de données et avant une K2e avant-dernière sous-trame allouée au paquet de données, K1 et K2 étant des nombres entiers supérieurs à 1.

5. Procédé selon la revendication 1, dans lequel une position de l'espace de recherche dans le domaine temporel est déterminée de l'une des manières suivantes:
déterminer la position de l'espace de recherche dans le domaine temporel par signalisation;
déterminer la position dans le domaine temporel de l'espace de recherche en fonction de la dernière sous-trame allouée au paquet de données;
déterminer une position temporelle candidate de l'espace de recherche par signalisation, et déterminer la position temporelle de l'espace de recherche en fonction de la position temporelle candidate et d'une dernière sous-trame allouée au paquet de données;
déterminer une position temporelle candidate de l'espace de recherche par signalisation, et déterminer la position temporelle de l'espace de recherche en fonction de la position temporelle candidate et d'une sous-trame allouée au paquet de données;
déterminer la position dans le domaine temporel de l'espace de recherche en fonction du nombre de sous-trames allouées au paquet de données; ou
déterminer la position dans le domaine temporel de l'espace de recherche en fonction du nombre de sous-trames allouées au paquet de données et du nombre de sous-trames allouées à l'espace de recherche.

6. Procédé selon la revendication 1, dans lequel une bande étroite de l'espace de recherche est déterminée de l'une des manières suivantes:
déterminer la bande étroite de l'espace de recherche par signalisation; ou
déterminer la bande étroite de l'espace de recherche en fonction d'une bande étroite d'un espace de recherche spécifique à l'équipement utilisateur.

7. Procédé selon la revendication 1, dans lequel une position dans le domaine temporel du deuxième intervalle de liaison montante est déterminé de l'une des manières suivantes:
déterminer la position dans le domaine temporel du deuxième intervalle de liaison montante par signalisation;
faire commencer la position dans le domaine temporel du deuxième intervalle de liaison montante à partir d'une première sous-trame après le premier intervalle de liaison montante;
déterminer une position candidate dans le domaine temporel du deuxième intervalle de liaison montante par signalisation, et
déterminer la position dans le domaine temporel du deuxième intervalle de liaison montante en fonction de la position candidate dans le domaine temporel du deuxième intervalle de liaison montante et d'une sous-trame allouée au paquet de données;
déterminer la position dans le domaine temporel du deuxième intervalle de liaison montante en fonction du nombre de sous-trames allouées au paquet de données; ou
déterminer la position dans le domaine temporel du deuxième intervalle de liaison montante en fonction du nombre de sous-trames allouées au paquet de données et du nombre de sous-trames allouées au deuxième intervalle de liaison montante.

8. Procédé d'envoi d'informations, le procédé étant réalisé par un dispositif d'envoi d'informations, comprenant:
le déclenchement (S1101) d'un équipement utilisateur pour réaliser une première opération, la première opération comprenant la réception d'informations de commande de liaison descendante, DCI, dans un espace de recherche; et
l'envoi (S1102) des DCI dans l'espace de recherche à condition que la première opération soit de recevoir les DCI dans l'espace de recherche;
dans un cas où la première opération est de recevoir les DCI dans l'espace de recherche, l'espace de recherche comprend un espace de recherche spécifique à l'équipement utilisateur ajouté sur la base d'un espace de recherche existant ou d'un espace de recherche commun ajouté sur la base d'un espace de recherche existant, l'espace de recherche existant faisant référence à un espace de recherche avant le déclenchement de l'équipement utilisateur pour recevoir les DCI;
pour un système semi-duplex à répartition en fréquence (HD-FDD), l'espace de recherche est situé à l'intérieur d'un espace de liaison montante de l'équipement utilisateur; et
l'intervalle de liaison montante est un deuxième intervalle de liaison montante, est dans une période où un paquet de données est envoyé et est utilisé pour recevoir les DCI, le deuxième intervalle de liaison montante étant un intervalle de liaison montante ajouté sur la base d'un intervalle de liaison montante existant, l'intervalle de liaison montante existant étant un premier intervalle de liaison montante, le premier intervalle de liaison montante étant un intervalle de liaison montante utilisé pour une synchronisation temps-fréquence de liaison descendante par l'équipement utilisateur.

9. Procédé selon la revendication 8, dans lequel le déclenchement de l'équipement utilisateur pour réaliser la première opération comprend l'un des éléments suivants:
le déclenchement de l'équipement utilisateur par le paquet de données pour réaliser la première opération;
le déclenchement de l'équipement utilisateur par un nombre de sous-trames allouées au paquet de données pour réaliser la première opération;
le déclenchement de l'équipement utilisateur par un format des DCI pour réaliser la première opération;
le déclenchement de l'équipement utilisateur en signalant dans les DCI l'exécution de la première opération;
le déclenchement de l'équipement utilisateur par un mode de transmission du paquet de données pour réaliser la première opération;
le déclenchement de l'équipement utilisateur par un deuxième signal pour réaliser la première opération;
le déclenchement de l'équipement utilisateur par un type du paquet de données pour réaliser la première opération; ou
le déclenchement de l'équipement utilisateur par une longueur de sous-trame pour réaliser la première opération;
dans lequel
le déclenchement de l'équipement utilisateur par le paquet de données pour réaliser la première opération comprend:
le déclenchement de l'équipement utilisateur en ordonnançant le paquet de données pour réaliser la première opération;
le déclenchement de l'équipement utilisateur en fonction du nombre de sous-trames allouées au paquet de données pour réaliser la première opération comprend: le déclenchement de l'équipement utilisateur en faisant en sorte que le nombre de sous-trames allouées au paquet de données atteigne un seuil défini pour réaliser la première opération;
le déclenchement de l'équipement utilisateur par le format des DCI pour réaliser la première opération comprend:
le déclenchement de l'équipement utilisateur en définissant le format des DCI pour un octroi de ressource comme format spécifié pour réaliser la première opération;
le déclenchement de l'équipement utilisateur par la signalisation dans les DCI pour réaliser la première opération comprend : l'instruction à l'équipement utilisateur par la signalisation dans les DCI pour l'octroi de ressource de réaliser la première opération;
le déclenchement de l'équipement utilisateur par le mode de transmission du paquet de données pour réaliser la première opération comprend: le déclenchement de l'équipement utilisateur par le réglage du mode de transmission du paquet de données comme mode de transmission spécifié pour réaliser la première opération, le mode de transmission spécifié comprenant le multiplexage spatial ou la diversité spatiale;
le déclenchement de l'équipement utilisateur par le deuxième signal pour réaliser la première opération comprend:
le déclenchement de l'équipement utilisateur en délivrant le deuxième signal avec une séquence spécifiée sur une ressource temps-fréquence spécifiée pour réaliser la première opération;
le déclenchement de l'équipement utilisateur par le type du paquet de données pour réaliser la première opération comprend: le déclenchement de l'équipement utilisateur par la programmation d'un type spécifié de paquet de données pour réaliser la première opération, un type spécifié de paquet de données étant un paquet de données pour confirmer la réception d'un message de libération de connexion de commande de ressource radio (RRC); et
le déclenchement de l'équipement utilisateur par la longueur de sous-trame pour réaliser la première opération comprend:
le déclenchement de l'équipement utilisateur en ordonnançant la transmission du paquet de données sur une sous-trame ayant une longueur de sous-trame prédéfinie pour réaliser la première opération, la sous-trame ayant une longueur de sous-trame prédéfinie comprenant une sous-trame normale ou une sous-trame courte; et
dans lequel, à condition que la première opération soit de recevoir les DCI dans l'espace de recherche, les DCI comprennent au moins l'un des éléments suivants:
des DCI pour un octroi de ressource;
des DCI pour une commande de puissance;
des DCI un pour un retour d'information d'accusé de réception, ACK; ou
des DCI pour un retour d'information d'accusé de réception, ACK négatif.

10. Procédé selon la revendication 8, dans lequel l'espace de recherche est situé à l'intérieur d'une période de transmission du paquet de données;
dans lequel une position de domaine temporel de l'espace de recherche est située après une K1e sous-trame allouée au paquet de données et avant une K2e avant-dernière sous-trame allouée au paquet de données, K1 et K2 étant des nombres entiers supérieurs à 1.

11. Procédé selon la revendication 8, dans lequel une position de l'espace de recherche dans le domaine temporel est déterminée de l'une des manières suivantes:
indiquer la position dans le domaine temporel de l'espace de recherche par signalisation;
déterminer la position dans le domaine temporel de l'espace de recherche en fonction de la dernière sous-trame allouée au paquet de données;
indiquer une position temporelle candidate de l'espace de recherche par signalisation, et déterminer la position temporelle de l'espace de recherche en fonction de la position temporelle candidate et d'une dernière sous-trame allouée au paquet de données;
indiquer une position temporelle candidate de l'espace de recherche par signalisation, et déterminer la position temporelle de l'espace de recherche en fonction de la position temporelle candidate et d'une sous-trame allouée au paquet de données;
déterminer la position dans le domaine temporel de l'espace de recherche en fonction du nombre de sous-trames allouées au paquet de données; ou
déterminer la position dans le domaine temporel de l'espace de recherche en fonction du nombre de sous-trames allouées au paquet de données et du nombre de sous-trames allouées à l'espace de recherche.

12. Procédé selon la revendication 8, dans lequel une bande étroite de l'espace de recherche est déterminée de l'une des manières suivantes:
indiquer la bande étroite de l'espace de recherche par signalisation; ou
déterminer la bande étroite de l'espace de recherche par une bande étroite d'un espace de recherche spécifique à l'équipement utilisateur.

13. Procédé selon la revendication 8, dans lequel une position dans le domaine temporel du deuxième intervalle de liaison montante est déterminé de l'une des manières suivantes:
indiquer la position dans le domaine temporel du deuxième intervalle de liaison montante par signalisation;
faire commencer la position dans le domaine temporel du deuxième intervalle de liaison montante à partir d'une première sous-trame après le premier intervalle de liaison montante;
indiquer une position temporelle candidate du deuxième intervalle de liaison montante par la signalisation, et déterminer la position temporelle du deuxième intervalle de liaison montante en fonction de la position temporelle candidate du deuxième intervalle de liaison montante et d'une sous-trame allouée au paquet de données;
déterminer la position dans le domaine temporel du deuxième intervalle de liaison montante en fonction du nombre de sous-trames allouées au paquet de données; ou
déterminer la position dans le domaine temporel du deuxième intervalle de liaison montante en fonction du nombre de sous-trames allouées au paquet de données et du nombre de sous-trames allouées au deuxième intervalle de liaison montante.

14. Équipement utilisateur comprenant: un premier processeur (1210), une première mémoire (1220) et un bus de communication (1230), le bus de communication (1230) étant configuré pour obtenir une communication de connexion entre le premier processeur (1210) et la première mémoire (1220); et
le premier processeur (1210) étant configuré pour exécuter des programmes de réception d'informations stockés dans la première mémoire (1220) afin de réaliser les étapes du procédé selon l'une des revendications 1 à 7.

15. Dispositif d'envoi d'informations comprenant: un deuxième processeur (1310), une deuxième mémoire (1320) et un bus de communication (1330), le bus de communication (1330) étant configuré pour réaliser une communication de connexion entre le deuxième processeur (1310) et la deuxième mémoire (1320); et
lequel le deuxième processeur (1310) étant configuré pour exécuter des programmes d'envoi d'informations stockés dans la deuxième mémoire (1320) afin de réaliser les étapes de du procédé selon l'une des revendications 8 à 13.
